# EUROPÄISCHE PATENTSCHRIFT

(11) **EP 3 918 729 B1**
(45) Veröffentlichungstag und Bekanntmachung des Hinweises auf die Patenterteilung: **01.05.2024**
(21) Anmeldenummer: 20702985.1
(22) Anmeldetag: 29.01.2020
(51) Int. Cl.: H04M 1/72412, H04W 4/80, H04B 5/00, H04B 11/00

(54) **BIDIREKTIONALE KONFIGURATION VON SENSORKNOTEN MIT MOBILTELEFON OHNE ERWEITERUNG**
BIDIRECTIONAL CONFIGURATION OF SENSOR NODES WITH MOBILE TELEPHONE WITHOUT EXPANSION
CONFIGURATION BIDIRECTIONNELLE DE NOEUDS DE CAPTEUR À L'AIDE D'UN TÉLÉPHONE MOBILE SANS EXTENSION

(30) Priorität: 30.01.2019 DE 102019201152
(43) Veröffentlichungstag der Anmeldung: 08.12.2021
(73) Patentinhaber: Fraunhofer-Gesellschaft zur Förderung der angewandten Forschung e.V., 80686 München (DE)
(72) Erfinder: SCHLICHT, Michael, 91058 Erlangen (DE); BERNHARD, Josef, 91058 Erlangen (DE); KILIAN, Gerd, 91058 Erlangen (DE); SOLLER, Dominik, 91058 Erlangen (DE); JARRESCH, Alexej, 91058 Erlangen (DE); ERETH, Stefan, 91058 Erlangen (DE)
(74) Vertreter: Schlenker, Julian
(86) Internationale Anmeldenummer: PCT/EP2020/052105
(87) Internationale Veröffentlichungsnummer: WO 2020/157098

(56) Entgegenhaltungen:
- CN-U- 206 302 413
- US-A1- 2013 143 486
- US-A1- 2014 369 170
- US-A1- 2015 041 534

## Beschreibung

Ausführungsbeispiele der vorliegenden Erfindung beziehen sich auf ein Verfahren zum Übertragen von Daten zwischen einem Benutzerendgerät und einem anderen Gerät. Weitere Ausführungsbeispiele beziehen sich auf ein Benutzerendgerät, ein anderes Gerät und ein System mit einem Benutzerendgerät und einem anderen Gerät. Manche Ausführungsbeispiele beziehen sich auf eine bidirektionale Konfiguration von Sensorknoten mit Mobiltelefon ohne Erweiterung.

Herkömmlicherweise werden benutzerkonfigurierbare Geräte, wie z.B. loT-Knoten (z.B. Sensorknoten) oder WLAN Kameras, über eine drahtgebundene Verbindung konfiguriert. Hierzu sind jedoch mehrere elektrische Kontakte sowohl am zu konfigurierenden Gerät als auch an dem zur Konfiguration des Geräts eingesetzten Benutzerendgerät, z.B. einem Mobiltelefon, erforderlich.

Alternativ können benutzerkonfigurierbare Geräte über eine Funkverbindung konfiguriert werden. Hierzu werden jedoch dedizierte Sende/Empfangsbausteine benötigt.

Des Weiteren können benutzerkonfigurierbare Geräte über eine optische Verbindung konfiguriert werden. Hierzu sind jedoch sowohl eine Sichtverbindung als auch dedizierte optische Komponenten erforderlich.

Darüber hinaus können benutzerkonfigurierbare Geräte über eine akustische Verbindung konfiguriert werden, wie dies beispielsweise bei Rauchmeldern üblich ist. Der Einsatz einer akustischen Verbindung erfordert jedoch ein Mikrofon im Gerät.

Ferner können benutzerkonfigurierbare Geräte mittels einer magnetischen Kopplung konfiguriert werden. Üblicherweise wird hierbei auf NFC (NFC = near field communication, dt. Nahfeldkommunikation) zurückgegriffen, wozu jedoch zusätzliche NFC Bausteine im Gerät erforderlich sind. Erschwerend kommt hinzu, dass nicht alle Benutzerendgeräte NFC unterstützen. Beispielweise unterstützen aktuell verfügbare iPhones ^{®} über NFC nur lesen, jedoch nicht schreiben.

Ferner ist die Ausnutzung des magnetischen Effekts von Lautsprechern bekannt. So beschreibt die US 2,381,097 A einen sog. Telefonmithörverstärker, der den magnetischen Effekt von Lautsprechern ausnutzt. Hierbei wird das magnetische Feld eines Lautsprechers empfangen, verstärkt, und wieder durch einen weiteren Lautsprecher in ein akustisches Signal verwandelt.

Die US 4,415,769 A beschreibt eine Vorrichtung, die es ermöglicht, Signale über eine Telefonleitung durch elektromagnetische Ankopplung an zumindest ein induktives Element des Telefonapparats zu senden und zu empfangen.

Die US 3,764,746 A beschreibt einen Datenkoppler zum Koppeln eines Datenterminals an ein Telefonnetz ohne direkte leitende Verbindung. Hierbei werden Datensignale von einer Induktionsspule elektromagnetisch in einen Lautsprecher eines Telefonhörers gekoppelt.

Die US 2015/041534 A1 beschreibt einen Transponder, der ein erstes zeitlich veränderliches Magnetfeld eines mobilen elektronischen Geräts detektiert und demoduliert, um elektronische Zahlungsinformation zu erhalten, und ein zweites zeitlich veränderliches Magnetfeld erzeugt, das von einem Lesegerät für Magnetstreifenkarten detektiert werden kann). Zudem wird eine bidirektionale Kommunikation zwischen dem mobilen elektronischen Gerät und dem Transponder beschrieben, wobei die Kommunikation von dem Transponder zu dem mobilen elektronischen Gerät mittels Funk (Bluetooth, WLAN, NFC) oder eines optischen Signals erfolgt.

Die US 2014/369170 A1 bezieht sich auf die Übertragung von Daten zwischen zwei mobilen Endgeräten oder zwischen einem mobilen Endgerät und einem Ohrhörer mittels eines magnetischen Feldes, wobei die jeweiligen akustischen Wandler zum Erzeugen/Detektieren des magnetischen Feldes genutzt werden.

Die US 2013/143486 A1 beschreibt ein mobiles drahtloses Kommunikationsgerät mit einem Nahfeldkommunikations(NFC)-Gerät und einem Magnetsensor. Ein Prozessor ist mit dem NFC-Gerät und dem Magnetsensor gekoppelt und ist basierend auf dem Magnetsensor zwischen einem aktiven Modus und einem Ruhemodus umschaltbar. Der Prozessor ist so konfiguriert, dass er basierend auf der Kommunikation über das NFC-Gerät ungeachtet des Magnetsensors im aktiven Modus bleibt.

Der vorliegenden Erfindung liegt somit die Aufgabe zugrunde, ein Konzept zu schaffen, welches eine kostengünstige und durch einen Benutzer einfach durchzuführende Konfiguration eines Geräts ermöglicht.

Diese Aufgabe wird durch die unabhängigen Patentansprüche gelöst.

Vorteilhafte Weiterbildungen finden sich in den abhängigen Patentansprüchen.

Der vorliegenden Erfindung liegt die Idee zugrunde, einen elektromagnetischen Aktor eines Lautsprechers des Benutzerendgeräts oder einen über eine (z.B. drahtgebundene oder drahtlose) Audioschnittstelle des Benutzerendgeräts mit dem Benutzerendgerät verbundenen elektromagnetischen Schwingkreis zu verwenden, um ein Magnetfeld zu erzeugen, das die an das andere Gerät (z.B. einen loT-Knoten oder eine WLAN Kamera) zu übertragene Daten (z.B. Konfigurationsdaten zur Konfiguration des anderen Geräts) trägt, während von dem anderen Gerät zu dem Benutzerendgerät zu übertragene Daten basierend auf einem anderen Signal, wie z.B. einem optischen Signal, einen akustischen Signal oder einem Funksignal, übertragen werden, welches beispielsweise von einer Kamera, Mikrofon oder Funkmodul des Benutzerendgeräts erfasst werden kann.

Dies hat den Vorteil, dass hierzu jedes handelsübliche Benutzerendgerät, wie z.B. ein Mobiltelefon oder Tablet, verwendet werden kann.

Im anderen Gerät kann zur Detektion des Magnetfelds, welches die Daten trägt, ein kostengünstiger elektromagnetischer Schwingkreis zum Einsatz kommen, der beispielsweise mittels eines LC-Schwingkreises realisiert werden kann. Zur Erzeugung des anderen Signals kann im anderen Gerät eine kotengünstige Ausgabeeinrichtung, wie z.B. eine LED oder eine Anzeige zur Erzeugung eines optischen Signals, ein akustischer Signalgeber, wie z.B. eine Piezoscheibe, zur Erzeugung eines akustischen Signals oder ein Funkmodul zur Erzeugung eines Funksignals zum Einsatz kommen.

Ausführungsbeispiele schaffen somit eine bidirektionale Konfigurationsmöglichkeit mit einem serienmäßigen Mobiltelefon ohne Erweiterung oder Modifikation.

Ausführungsbeispiele schaffen ein Verfahren zur [z.B. bidirektionalen] Übertragung von Daten zwischen einem Benutzerendgerät und einem anderen Gerät. Das Verfahren umfasst einen Schritt des Generierens eines Signals zum Ansteuern einer elektromagnetischen Funktionseinheit, wobei die elektromagnetische Funktionseinheit ein Aktuator eines Lautsprechers des Benutzerendgeräts ist oder wobei die elektromagnetische Funktionseinheit ein mit dem Benutzerendgerät verbundener elektromagnetischer Schwingkreis ist. Ferner umfasst das Verfahren einen Schritt des Ansteuerns der elektromagnetischen Funktionseinheit mit dem generierten Signal, um durch die elektromagnetische Funktionseinheit ein magnetisches Signal [z.B. magnetisches Feld] zu erzeugen, das von dem Benutzerendgerät zu dem anderen Gerät zu übertragene erste Daten trägt. Ferner umfasst das Verfahren einen Schritt des Detektierens [z.B. Erfassen] [z.B. mit dem Benutzerendgerät] eines von dem anderen Gerät ausgegebenen anderen Signals, wobei das andere Signal von dem anderen Gerät zu dem Benutzerendgerät zu übertragene zweite Daten trägt [z.B. um die zweiten Daten zu empfangen], wobei sich das magnetische Signal und das andere Signal in der physikalischen Signalart unterscheiden; wobei die ersten Daten Konfigurationsdaten zur Konfiguration des anderen Geräts sind,wobei das Verfahren ferner einen Schritt des Detektierens des magnetischen Signals mit einem elektromagnetischen Schwingkreis des anderen Geräts aufweist, um die ersten Daten zu empfangen,wobei das Verfahren ferner einen Schritt des Konfigurierens des anderen Geräts basierend auf den empfangenen ersten Daten aufweist.

Bei Ausführungsbeispielen kann das andere Signal von dem anderen Gerät ansprechend auf das magnetische Signal [z.B. ansprechend auf einem Empfang des magnetischen Signals oder der ersten Daten, die das magnetische Signal trägt] ausgeben werden.

Bei Ausführungsbeispielen kann das andere Signal ein optisches Signal, ein akustisches Signal oder ein elektromagnetisches Signal [z.B. Funksignal] sein.

Bei Ausführungsbeispielen kann das andere Signal von dem Benutzerendgerät [z.B. mittels einer Kamera, eines Mikrofons oder einer Funkschnittstelle] oder von einem mit dem Benutzerendgerät verbundenen Gerät [z.B. von einer Basisstation im Falle eines Funksignals, oder eines Headsets oder drahtlosen Audioadapters im Falle eines akustischen Signals] detektiert [z.B. erfasst] werden.

Bei Ausführungsbeispielen kann das andere Signal ein optisches Signal sein, wobei das optische Signal mittels einer Kamera des Benutzerendgeräts detektiert [z.B. erfasst] werden kann, um die zweiten Daten zu empfangen, die das optische Signal trägt.

Bei Ausführungsbeispielen kann das optische Signal mittels einer Leuchtdiode, einer Anzeige oder eines Bildschirms des anderen Geräts ausgegeben werden.

Bei Ausführungsbeispielen kann das optische Signal eine zweidimensionale optoelektronisch lesbare Schrift sein [wie z.B. ein 2D-Barcode oder QR-Code], die auf der Anzeige des anderen Geräts ausgebeben wird.

Bei Ausführungsbeispielen kann das andere Signal ein akustisches Signal ist, wobei das akustische Signal mittels eines Mikrofons des Benutzerendgeräts oder eines mit dem Benutzerendgerät verbundenen Mikrofons [z.B. Headset oder Bluetooth Headset] detektiert [z.B. erfasst] werden kann, um die zweiten Daten zu empfangen, die das akustische Signal trägt.

Bei Ausführungsbeispielen kann das akustische Signal mittels eines akustischen Signalgebers des anderen Geräts ausgegeben werden.

Bei Ausführungsbeispielen kann der akustische Signalgeber ein Lautsprecher, ein Summer, ein Piper oder eine Piezoscheibe sein.

Bei Ausführungsbeispielen kann das andere Signal ein elektromagnetisches Signal [z.B. Funksignal] sein, wobei das elektromagnetische Signal mittels einer Funkschnittstelle des Benutzerendgeräts oder einer Funkschnittstelle einer mit dem Benutzerendgerät verbunden Basisstation detektiert [z.B. erfasst] werden kann, um die zweiten Daten zu empfangen, die das elektromagnetische Signal trägt.

Beispielsweise kann das elektromagnetische Signal ein Bluetooth Signal, ein WLAN Signal, ein Mobilfunksignal [z.B. GSM, UMTS, LTE], ein RFID Signal oder ein UniDir-MIOTY Signal sein.

Beispielsweise können die empfangen zweiten Daten von der Basisstation an das Benutzerendgerät übermittelt werden.

Bei Ausführungsbeispielen kann die Funkschnittstelle eine Bluetooth Schnittstelle, eine WLAN Schnittstelle, eine Mobilfunkschnittstelle, eine RFID Schnittstelle oder eine UniDir-MIOTY Schnittstelle sein.

Bei Ausführungsbeispielen kann das Verfahren ferner einen Schritt des Ausgebens des anderen Signals mit dem anderen Gerät aufweisen.

Bei Ausführungsbeispielen kann das generierte Signal im Frequenzbereich zwischen 10 Hz und 22 KHz liegen.

Bei Ausführungsbeispielen kann das generierte Signal im Ultraschallfrequenzbereich oder höher liegen.

Bei Ausführungsbeispielen können die Daten dem generierten Signal (128) aufmoduliert sein.

Bei Ausführungsbeispielen kann ein Verhältnis zwischen Trägerfrequenz und Modulationsbandbreite des generierten Signals kleiner als 25% sein.

Bei Ausführungsbeispielen können die ersten Daten Konfigurationsdaten zur Konfiguration des anderen Geräts sein.

Bei Ausführungsbeispielen kann das generierte Signal mit einem Audiosignalgenerator des Benutzerendgeräts generiert werden.

Bei Ausführungsbeispielen kann das generierte Signal mit einem mit dem Benutzerendgerät verbundenen Audiosignalgenerators generiert werden.

Bei Ausführungsbeispielen kann die elektromagnetische Funktionseinheit ein mit dem Benutzerendgerät verbundener elektromagnetischer Schwingkreis sein, wobei der elektromagnetische Schwingkreis über eine Audioschnittstelle des Benutzerendgeräts mit dem Benutzerendgerät verbunden sein kann, oder wobei der elektromagnetische Schwingkreis über eine Audioschnittstelle eines mit dem Benutzerendgerät verbundenen drahtlosen Audioadapters verbunden sein kann.

Beispielsweise kann die Audioschnittstelle eine kabelgebundene Audioschnittstelle sein, wie z.B. eine Klinkenbuchse, ein USB-C-Audio Anschluss oder ein Lightning-Audio Anschluss.

Beispielsweise kann der drahtlose Audioadapter ein Bluetooth, WLAN oder Certified Wireless USB Audioadapter sein.

Bei Ausführungsbeispielen kann der elektromagnetische Schwingkreis ein LC-Schwingkreis sein.

Bei Ausführungsbeispielen kann das Benutzerendgerät ein Mobiltelefon oder Tablet sein.

Bei Ausführungsbeispielen kann das Verfahren ferner einen Schritt des Detektierens des magnetischen Signals [z.B. magnetischen Feldes] mit einem elektromagnetischen Schwingkreis des anderen Geräts aufweisen, um die ersten Daten zu empfangen.

Beispielsweise kann das Verfahren ferner einen Schritt des Annäherns des Benutzerendgeräts und des anderen Geräts vor dem Erzeugen des magnetischen Signals, das die ersten Daten trägt, aufweisen.

Bei Ausführungsbeispielen kann das Verfahren ferner einen Schritt des Konfigurierens des anderen Geräts basierend auf den empfangenen ersten Daten aufweisen.

Bei Ausführungsbeispielen kann das Konfigurieren des anderen Geräts Verbinden des anderen Geräts mit einem Kommunikationsnetzwerk unter Verwendung der empfangen ersten Daten umfassen.

Bei Ausführungsbeispielen können die Schritte des Detektierens und des Konfigurierens durch das andere Gerät durchgeführt werden.

Bei Ausführungsbeispielen kann das andere Gerät ein loT-Knoten oder eine WLAN Kamera sein.

Bei Ausführungsbeispielen kann der IoT-Knoten ein Sensorknoten oder Aktorknoten sein.

Bei Ausführungsbeispielen kann das Verfahren ferner einen Schritt des Bereitstellens einer grafischen Benutzeroberfläche auf dem Benutzerendgerät umfassen, wobei das magnetische Signal ansprechend auf eine Benutzereingabe auf der grafischen Benutzeroberfläche generiert werden kann.

Bei Ausführungsbeispielen können die ersten Daten, die das magnetische Feld trägt, auf hinterlegten Daten basieren und/oder auf von dem Benutzer auf der grafischen Benutzeroberfläche eingegebenen Daten basieren.

Bei Ausführungsbeispielen kann das magnetische Signal ansprechend auf eine Eingabe [z.B. Tastendruck] an einer Basisstation, mit der das andere Gerät verbunden werden soll, generiert werden.

Bei Ausführungsbeispielen kann das Verfahren ferner einen Schritt des Abrufens einer Audiodatei umfassen, wobei das magnetische Signal basierend auf der Audiodatei generiert werden kann.

Beispielsweise kann die Audiodatei auf dem Benutzerendgerät wiedergegen werden, um das Signal zum Ansteuern der elektrischen Funktionseinheit zu generieren.

Bei Ausführungsbeispielen kann das Verfahren ferner einen Schritt des Übertragens eines Audiosignals über einer Fernsprechverbindung umfassen, wobei das Signal zum Ansteuern der elektromagnetischen Funktionseinheit basierend auf dem über die Fernsprechverbindung übertragenen Audiosignal generiert werden kann [z.B. kann das generierte Signal eine verstärkte [z.B. analoge] Version des [z.B. digitalen] Audiosignals sein].

Beispielsweise kann eine Fernsprechverbindung genutzt werden, wobei ein Audiosignal über diese Fernsprechverbindung übermittelt wird, wobei dieses Audiosignal bei Wiedergabe durch das Fernsprechgerät das magnetische Signal erzeugt.

Bei Ausführungsbeispielen kann das Verfahren eine Sprachkommunikation zu einer Person oder einem sprachgesteuerten System umfassen, wobei das Audiosignal auf Basis von Informationen aus der Sprachkommunikation erzeugt werden kann.

Bei Ausführungsbeispielen kann das andere Gerät ansprechend auf eine Detektion des magnetischen Signals von einem Betriebsmodus mit reduziertem Stromverbrauch in einen normalen Betriebsmodus wechseln, wobei das Verfahren ferner einen Schritt des Sendens eines weiteren Signals umfassen kann, wobei das weitere Signal von dem Benutzerendgerät zu dem anderen Gerät zu übertragene Dritte Daten trägt, wobei sich das magnetische Signal und das weitere Signal in der physikalischen Signalart unterscheiden.

Beispielsweise kann das andere Gerät einen Mikrocontroller und einen LC-Schwingkreis zum Detektieren des magnetischen Signals aufweisen, wobei der LC-Schwingkreis direkt mit einem Eingang oder Eingängen eines Komparators des Mikrocontrollers verbunden sein kann. Der Mikrocontroller kann dabei ansprechend auf einen Interrupt des Komparators von einem Betriebsmodus mit reduziertem Stromverbrauch in einen normalen Betriebsmodus wechseln, um das weitere Signal zu empfangen.

Bei Ausführungsbeispielen kann das weitere Signal mittels einer Nahfeldübertragungstechnik [z.B. NFC] übertragen werden.

Bei Ausführungsbeispielen können die dritten Daten Konfigurationsdaten zur Konfiguration des anderen Geräts sein.

Bei Ausführungsbeispielen kann das Verfahren ferner einen Schritt des Konfigurierens des anderen Geräts basierend auf den empfangenen dritten Daten aufweisen.

Bei Ausführungsbeispielen kann das Konfigurieren des anderen Geräts Verbinden des anderen Geräts mit einem Kommunikationsnetzwerk unter Verwendung der empfangen dritten Daten umfassen.

Weitere Ausführungsbeispiele, nicht zugehörig zu der beanspruchten Erfindung, schaffen ein Benutzerendgerät, wobei das Benutzerendgeräl ausgebildet ist, um einen Signalgenerator anzusteuern ein Signal zum Ansteuern einer elektromagnetischen Funktionseinheit zu generieren und um die elektromagnetische Funktionseinheit mit dem generierten Signal anzusteuern, um durch die elektromagnetische Funktionseinheit ein magnetisches Signal [z.B. magnetisches Feld] zu erzeugen, das von dem Benutzerendgerät zu einem anderen Gerät zu übertragene erste Daten trägt, wobei die elektromagnetische Funktionseinheit ein Aktuator eines Lautsprechers des Benutzerendgeräts ist oder wobei die elektromagnetische Funktionseinheit ein mit dem Benutzerendgerät verbundener elektromagnetischer Schwingkreis ist, wobei das Benutzerendgerät ausgebildet ist, um von einem anderen Gerät zu dem Benutzerendgerät zu übertragene zweite Daten zu empfangen, die von dem anderen Geräts mittels eines anderen Signals ausgegeben werden, wobei sich das magnetische Signal und das andere Signal in der physikalischen Signalart unterscheiden.

Bei Ausführungsbeispielen kann das andere Signal ein optisches Signal, ein akustisches Signal oder ein elektromagnetisches Signal [z.B. Funksignal] sein.

Bei Ausführungsbeispielen kann das andere Signal von dem Benutzerendgerät [z.B. mittels einer Kamera, eines Mikrofons oder einer Funkschnittstelle] oder von einem mit dem Benutzerendgerät verbundenen Gerät [z.B. von einer Basisstation im Falle eines Funksignals, oder eines Headsets oder drahtlosen Audioadapters im Falle eines akustischen Signals] detektiert [z.B. erfasst] werden.

Bei Ausführungsbeispielen kann das andere Signal ein optisches Signal sein, wobei das Benutzerendgerät ausgebildet sein kann, um das optische Signal mittels einer Kamera des Benutzerendgeräts zu detektieren [z.B. zu erfassen].

Bei Ausführungsbeispielen kann das andere Signal ein akustisches Signal sein, wobei das Benutzerendgerät ausgebildet sein kann, um das akustische Signal mittels eines Mikrofons des Benutzerendgeräts oder eines mit dem Benutzerendgerät verbundenen Mikrofons [z.B. Headset oder Bluetooth Headset] zu detektieren [z.B. zu erfassen].

Bei Ausführungsbeispielen kann das andere Signal ein elektromagnetisches Signal [z.B. Funksignal] sein, wobei das Benutzerendgerät ausgebildet sein kann, um das elektromagnetische Signal mittels einer Funkschnittstelle des Benutzerendgeräts oder einer Funkschnittstelle einer mit dem Benutzerendgerät verbunden Basisstation zu detektieren [z.B. zu erfassen].

Beispielsweise kann das elektromagnetische Signal ein Bluetooth Signal, ein WLAN Signal, ein Mobilfunksignal [z.B. GSM, UMTS, LTE], ein RFID Signal oder ein UniDir-MIOTY Signal sein.

Weitere Ausführungsbeispiele schaffen ein anderes Gerät, wobei das andere Gerät einen Mikrocontroller, einen elektromagnetischen Schwingkreis zum Detektieren eines magnetischen Signals [z.B. magnetischen Feldes], und eine Ausgabeeinrichtung zum Ausgeben eines anderen Signals aufweist, wobei der Mikrocontroller ausgebildet ist, um das von dem elektromagnetischen Schwingkreis detektierte magnetische Signal auszuwerten, um von einem Benutzerendgerät zu dem anderen Gerät zu übertragene erste Daten zu empfangen, die das magnetische Signal trägt, wobei der Mikrocontroller ausgebildet ist, um mittels der Ausgabeeinrichtung das andere Signal auszugeben, wobei das andere Signal von dem anderen Gerät zu dem Benutzerendgerät zu übertragene zweite Daten trägt, wobei sich das magnetische Signal und das andere Signal in der physikalischen Signalart unterscheiden, wobei die ersten Daten Konfigurationsdaten zur Konfiguration des anderen Geräts sind,wobei der Mikrocontroller konfiguriert ist, um das andere Gerät basierend auf den Konfigurationsdaten zu konfigurieren, wobei der Mikrocontroller konfiguriert ist, um das andere Gerät basierend auf den Konfigurationsdaten in ein drahtloses Netzwerk einzubinden.

Bei Ausführungsbeispielen kann das andere Signal ein optisches Signal, ein akustisches Signal oder ein elektromagnetisches Signal [z.B. Funksignal] sein.

Bei Ausführungsbeispielen kann das andere Signal ein optisches Signal sein, wobei die Ausgabeeinrichtung eine Leuchtdiode, eine Anzeige oder ein Bildschirm sein kann.

Bei Ausführungsbeispielen kann das andere Signal ein akustisches Signal sein, wobei die Ausgabeeinrichtung ein akustischer Signalgeber sein kann.

Bei Ausführungsbeispielen kann der akustische Signalgeber ein Lautsprecher, ein Summer, ein Piper oder eine Piezoscheibe sein.

Bei Ausführungsbeispielen kann die Piezoscheibe direkt mit Mikrocontroller verbunden sein.

Bei Ausführungsbeispielen kann die Piezoscheibe über eine Spule mit dem Mikrocontroller verbunden sein.

Bei Ausführungsbeispielen kann die Piezoscheibe über zwei antiparallel geschaltete Dioden mit dem Mikrocontroller verbunden sein.

Bei Ausführungsbeispielen kann die Piezoscheibe über eine Spule und, in Reihe zu dieser Spule, über zwei antiparallel geschaltete Dioden mit dem Mikrocontroller verbunden sein. Bei Ausführungsbeispielen kann die Piezoscheibe resonant und/oder im Ultraschallbereich betrieben werden.

Bei Ausführungsbeispielen kann das andere Signal ein elektromagnetisches Signal [z.B. Funksignal] sein, wobei die Ausgabeeinrichtung eine Funkschnittstelle [z.B. eine Bluetooth Schnittstelle, eine WLAN Schnittstelle, eine Mobilfunkschnittstelle (z.B. GSM, UMTS oder LTE), eine RFID Schnittstelle oder eine UniDir-MIOTY Schnittstelle] sein kann.

Weitere Ausführungsbeispiele, nicht zugehörig zu der beanspruchten Erfindung, schaffen ein System mit einem Benutzerendgerät gemäß einem der hierin beschriebenen Ausführungsbeispiele und einem anderen Gerät gemäß einem der hierin beschriebenen Ausführungsbeispiele.

Ausführungsbeispiele der vorliegenden Erfindung werden bezugnehmend auf die beiliegenden Figuren näher beschrieben. Es zeigen:
- Fig. 1: ein Flussdiagramm eines Verfahrens zum Übertragen von Daten zwischen einem Benutzerendgerät und einem anderen Gerät, gemäß einem Ausführungsbeispiel der vorliegenden Erfindung,
- Fig. 2: ein schematisches Blockschaltbild eines Systems mit einem Benutzerendgerät und einem anderen Gerät, gemäß einem Ausführungsbeispiel der vorliegenden Erfindung;
- Fig. 3a: ein schematisches Blockschaltbild eines Systems mit einem Benutzerendgerät und einem anderen Gerät, gemäß einem weiteren Ausführungsbeispiel der vorliegenden Erfindung,
- Fig. 3b: ein schematisches Blockschaltbild eines Systems mit einem Benutzerendgerät und einem anderen Gerät, gemäß einem weiteren Ausführungsbeispiel der vorliegenden Erfindung, und
- Fig. 4: ein schematisches Blockschaltbild einer Ankopplung einer Piezoscheibe an einen Mikrocontroller des anderen Geräts, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

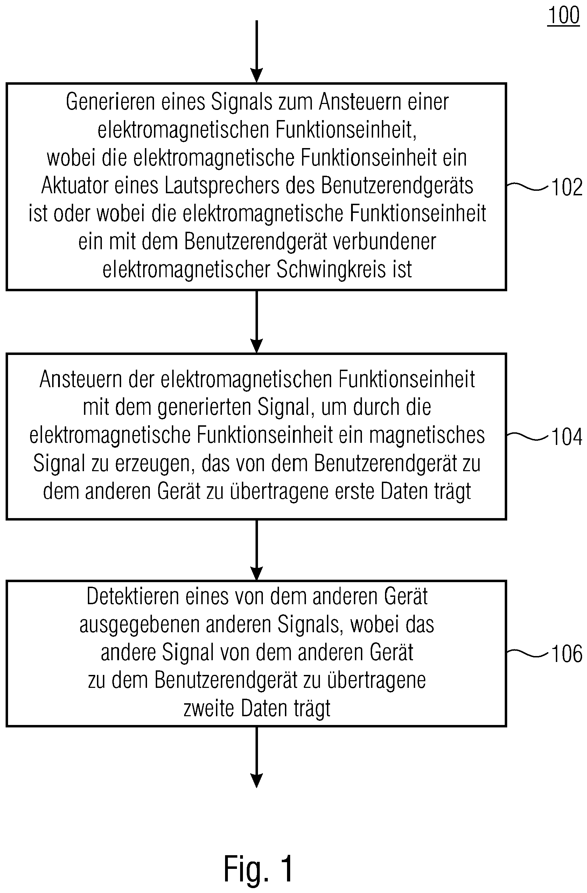

Fig. 1 zeigt ein Flussdiagramm eines Verfahrens 100 zur Übertragung von Daten zwischen einem Benutzerendgerät und einem anderen Gerät.

Das Verfahren 100 umfasst einen Schritt 102 des Generierens eines Signals zum Ansteuern einer elektromagnetischen Funktionseinheit, wobei die elektromagnetische Funktionseinheit ein Aktuator eines Lautsprechers des Benutzerendgeräts ist oder wobei die elektromagnetische Funktionseinheit ein mit dem Benutzerendgerät verbundener elektromagnetischer Schwingkreis ist.

Ferner umfasst das Verfahren 100 einen Schritt 104 des Ansteuerns der elektromagnetischen Funktionseinheit mit dem generierten Signal, um durch die elektromagnetische Funktionseinheit ein magnetisches Signal zu erzeugen, das von dem Benutzerendgerät zu dem anderen Gerät zu übertragene erste Daten trägt.

Ferner umfasst das Verfahren 100 einen Schritt 106 des Detektierens (z.B. Erfassens) eines von dem anderen Gerät ausgegebenen anderen Signals, wobei das andere Signal von dem anderen Gerät zu dem Benutzerendgerät zu übertragene zweite Daten trägt.

Dabei unterscheiden sich das magnetische Signal und das andere Signal voneinander in Bezug auf die physikalische Signalart.

Bei Ausführungsbeispielen kann das andere Signal ein optisches Signal, ein akustisches Signal oder ein Funksignal sein.

Ausführungsbeispiele ermöglichen es somit mit einem herkömmlichen Benutzerendgerät, d.h. ohne Hardwaremodifikation, zum einen ein magnetisches Signal an das andere Gerät zu übertragen und zum anderen ein anderes Signal von dem anderen Gerät zu empfangen, z.B. durch eine Kamera, ein Mikrofon oder ein Funkmodul des Benutzerendgeräts.

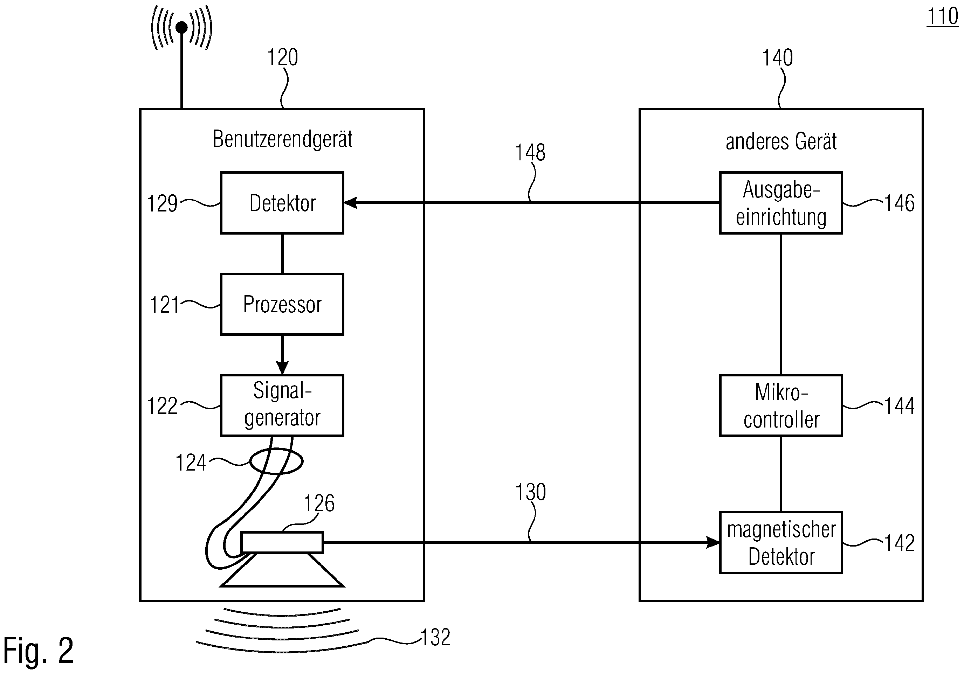

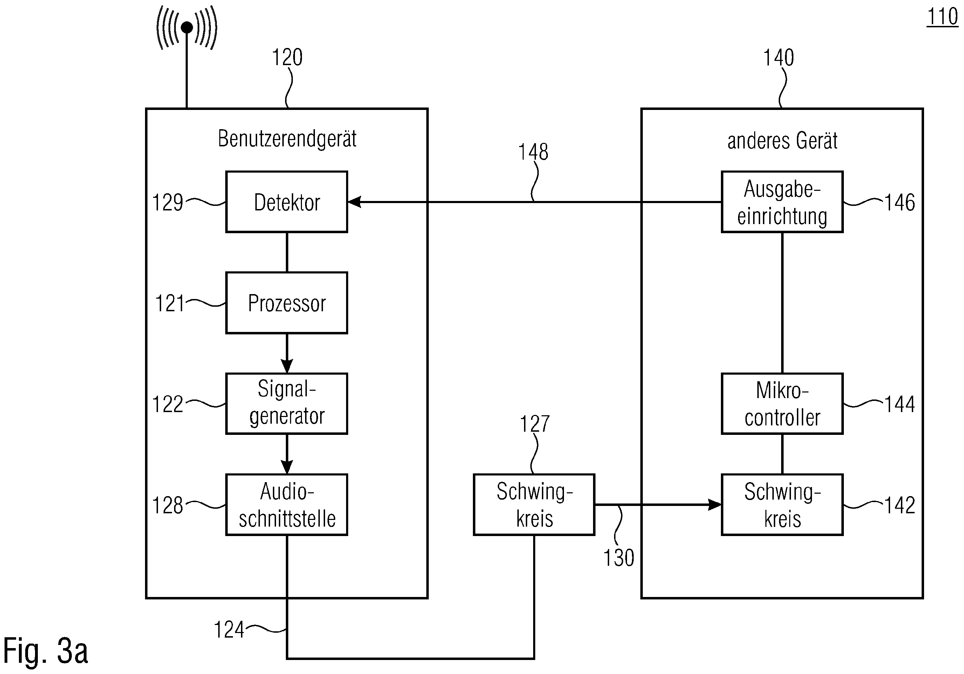

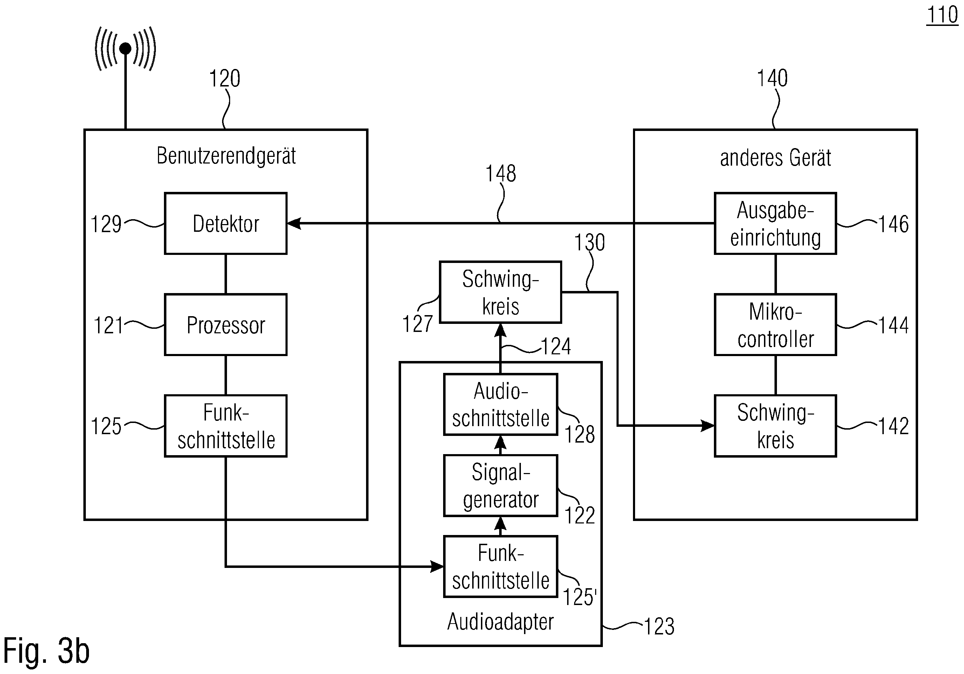

Im Folgenden werden Ausführungsbeispiele des in Fig. 1 gezeigten Verfahrens 100 zum Übertragen von Daten zwischen einem Benutzerendgerät und einem anderen Gerät anhand der Fig. 2, Fig. 3a und Fig. 3b näher erläutert.

Fig. 2 zeigt ein schematisches Blockschaltbild eines Systems 110 mit einem Benutzerendgerät 120 und einem anderen Gerät 140, gemäß einem Ausführungsbeispiel der vorliegenden Erfindung.

Bei Ausführungsbeispielen umfasst das Benutzerendgerät 120 einen Signalgenerator 122 (z.B. einen Audiosignalgenerator, wie z.B. einen Verstärker) und einen Lautsprecher 150 mit einem elektromagnetischen Aktuator 126 (z.B. einer Schwingspule). Das Benutzerendgerät 120 (oder z.B. ein Prozessor 121 des Benutzerendgeräts 120) ist ausgebildet, um den Signalgenerator 122 anzusteuern ein Signal 124 zur Ansteuerung des elektromagnetischen Aktuators 126 zu generieren, und um den elektromagnetischen Aktuator 126 mit dem generierten Signal 124 anzusteuern, um durch den elektromagnetischen Aktuator 126 ein magnetisches Signal (z.B. ein magnetisches Feld) 130 zu erzeugen, das die ersten Daten trägt.

Bei Ausführungsbeispielen kann das generierte Signal 124 im Ultraschallfrequenzbereich oder höher liegen. Die durch das Ansteuern des elektromagnetischen Aktuators 126 mit dem generierten Signal 124 ebenfalls erzeugten Schallwellen 132 liegen somit in einem für den Menschen nicht oder nur schlechter hörbaren Frequenzbereich oder werden bedingt durch die obere Grenzfrequenz des Lautsprechers 150 nicht oder nur gedämpft abgestrahlt.

Beispielsweise kann eine Frequenz oder ein Frequenzbereich des generierten Signals 124 oberhalb von 16 kHz liegen, z.B. im Bereich zwischen 16 kHz und 22 kHz.

Bei Ausführungsbeispielen können die ersten Daten dem generierten Signal 124 aufmoduliert sein, beispielsweise durch FSK (FSK = frequency shift keying, d.t. Frequenzumtastung), MSK (MSK = minimum shift keying) oder GMSK (GMSK = gaussian minimum shift keying). Natürlich kann auch eine andere Modulationsart zum Einsatz kommen, wie z.B. ASK (ASK = amplitude shift keying, dt. Amplitudenumtastung), PSK (PSK = phase shift keying, dt. PHasenumtastung) oder OOK (OOK = on-off keying, dt. eine Art der Amplitudenumtastung, bei der der Träger an- und ausgeschaltet wird).

Bei Ausführungsbeispielen kann das Verhältnis zwischen Trägerfrequenz und Modulationsbandbreite des generierten Signals kleiner sein als 25% (oder beispielsweise kleiner als 20% oder kleiner als 15%).

Bei Ausführungsbeispielen kann das Benutzerendgerät 120 ein Mobiltelefon (Smartphone) oder Tablet sein.

Bei Ausführungsbeispielen kann das andere Gerät 140 einen magnetischen Detektor 142 umfassen, der ausgebildet ist, um das magnetische Signal (z.B. magnetische Feld) 130, das die von dem Benutzerendgerät zu dem anderen Gerät 140 zu übertragenen ersten Daten trägt, zu detektieren.

Bei Ausführungsbeispielen kann das andere Gerät 140 ferner einen Microcontroller 144 umfassen, der ausgebildet ist, um das detektierte magnetische Signal (z.B. magnetische Feld) 130 auszuwerten, um die ersten Daten zu empfangen.

Bei Ausführungsbeispielen kann das andere Gerät 140 ferner eine Ausgabeeinrichtung 146 aufweisen, die ausgebildet ist, um ein anderes Signal 148 auszugeben. Der Microcontroller 144 kann dabei ausgebildet sein, um mittels der Ausgabeeinrichtung 146 das andere Signal 148 auszugeben, wobei das andere Signal 148 von dem anderen Gerät 140 zu dem Benutzerendgerät 120 zu übertragene zweite Daten trägt.

Gemäß Ausführungsbeispielen unterscheiden sich das magnetische Signal 130 und das andere Signal 148 in der physikalischen Signalart. So kann das andere Signal 148 beispielsweise ein optisches Signal, ein akustisches Signal oder ein elektromagnetisches Signal (z.B. Funksignal) sein.

Beispielsweise kann die Ausgabeeinrichtung 146 eine optische Ausgabeeinrichtung, wie z.B. eine Leuchtdiode, eine Anzeige oder ein Bildschirm sein, die ausgebildet ist, um ein optisches Signal auszugeben. Alternativ kann die Ausgabeeinrichtung 146 eine akustische Ausgabeeinrichtung sein, wie z.B. ein Lautsprecher, ein Summer, ein Piper oder eine Piezoscheibe. Alternativ kann die Ausgabeeinrichtung 146 eine Funkschnittstelle sein, wie z.B. eine Bluetooth Schnittstelle, eine WLAN (WLAN = wireless local area network) Schnittstelle, eine Mobilfunkschnittstelle (z.B. GSM (GSM = global system mobile), UMTS (UMTS = universal mobile telecommunication system), LTE (LTE = long term evolution)), eine RFID (RFID = radio frequency identification) Schnittstelle oder eine UniDir-MIOTY Schnittstelle sein.

Bei Ausführungsbeispielen kann das Benutzerendgerät 120 einen Detektor 129 aufweisen, der ausgebildet ist, um das andere Signal 148 zu detektieren. Alternativ kann das Benutzerendgerät 120 auch mit einem (externen) Detektor verbunden sein, der ausgebildet ist, um das andere Signal 148 zu detektieren.

Beispielsweise kann das andere Signal 148 ein akustisches Signal sein. In diesem Fall kann der Detektor 129 ein Mikrofon sein, das ausgebildet ist, um das akustisches Signal 148 zu detektieren. Hierbei kann ein Mikrofon des Benutzerendgeräts 120 genutzt werden oder aber auch ein mit dem Benutzerendgerät 120 (z.B. über eine drahtgebundene oder drahtlose Audioschnittstelle) verbundenes Mikrofon, beispielsweise eines Headsets oder Bluetooth Headsets. Alternativ kann das andere Signal 148 ein optisches Signal sein. In diesem Fall kann der Detektor 129 eine Kamera sein, die ausgebildet ist, um das optische Signal zu detektieren. Alternativ kann das andere Signal 148 ein Funksignal sein. In diesem Fall kann der Detektor eine Funkschnittstelle (z.B. Funkmodul) des Benutzerendgeräts oder einer mit dem Benutzerendgerät verbunden Basisstation sein. Das Funkschnittstelle kann beispielsweise eine Bluetooth Schnittstelle, eine WLAN Schnittstelle, eine Mobilfunkschnittstelle, eine RFID Schnittstelle oder eine UniDir-MIOTY Schnittstelle sein.

Bei Ausführungsbeispielen kann das Benutzerendgerät 120 ein Mobiltelefon (Smartphone) oder Tablet sein.

Bei Ausführungsbeispielen können die ersten Daten, die das Magnetfeld 130 trägt, Konfigurationsdaten sein. Der Microcontroller 144 kann ausgebildet sein, um das andere Gerät 140 basierend auf den Konfigurationsdaten zu konfigurieren, z.B. in ein drahtloses Netzwerk einzubinden.

Beispielsweise kann das andere Gerät 140 ein benutzerkonfigurierbares Gerät sein, wie z.B. ein IoT-Knoten (loT = internet of things, dt. Internet der Dinge) (z.B. ein Sensorknoten oder Aktorknoten) oder eine WLAN Kamera. In diesem Fall können die Konfigurationsdaten eine Information zur Einbindung des benutzerkonfigurierbaren Geräts 140 in ein drahtloses Netzwerk (z.B. Sensornetzwerk oder WLAN) aufweisen, wie z.B. ein Netzwerkname und Netzwerkschlüssel. Natürlich können dem benutzerkonfigurierbaren Gerät 140 durch die Konfigurationsdaten auch andere Parameter zugewiesen werden, wie z.B. einen zu verwenden Frequenzkanal, zu verwendenden Zeitschlitze, oder ein zu verwendendes Sprungmuster (engl. hopping pattern).

Ausführungsbeispiele der vorliegenden Erfindung schaffen somit ein preisgünstiges und allgemein verfügbares Verfahren, andere Geräte 140, wie z.B. loT-Knoten (z.B. Sensorknoten), zu konfigurieren.

Als Benutzerendgeräte 120 sind heutzutage Mobiltelefone allgemein verbreitet. In diesen Mobiltelefonen sind Lautsprecher 150 verbaut. Dabei handelt es sich (fast) ausschließlich um sog. elektromagnetischer Lautsprecher.

Das Benutzerendgerät 120 (z.B. Mobiltelefon) verfügt über einen Signalgenerator 122 mit einem Verstärker, der über zwei Anschlüsse mit der Schwingspule 126 des Lautsprechers 150 verbunden ist. Um ein Audiosignal auszugeben, wird das Audiosignal an den Verstärker gegeben, dieser gibt dieses Signal 124 verstärkt an die Schwingspule 126. Dadurch wird die Membran des Lautsprechers 150 ausgelenkt und es entsteht ein akustisches Signal 132. Neben dem akustischen Signal entsteht allerdings auch prinzipbedingt ein Magnetfeld 130, dessen Zeitverlauf durch das Audiosignal bestimmt wird.

Durch Empfang dieses Magnetfeldes 130 mit einem magnetischen Detektor 142, z.B. einem einfachen Schwingkreis (z.B. nur eine Spule und ein Kondensator), können andere Geräte 140 wie Sensorknoten preisgünstig und energieeffizient konfiguriert werden.

Fig. 3a zeigt ein schematisches Blockschaltbild eines Systems 110 mit einem Benutzerendgerät 120 und einem anderen Gerät 140, gemäß einem weiteren Ausführungsbeispiel der vorliegenden Erfindung.

Das Benutzerendgerät 120 umfasst einen Signalgenerator 122, wobei das Benutzerendgerät 120 (oder z.B. ein Prozessor 121 des Benutzerendgeräts 120) ausgebildet ist, um den Signalgenerator 122 anzusteuern ein Signal 124 zum Ansteuern eines elektromagnetischen Schwingkreises 127 zu generieren und den elektromagnetischen Schwingkreises 127 mit dem generierten Signal 124 anzusteuern, um durch den elektromagnetischen Schwingkreis 127 ein magnetisches Signal (z.B. magnetisches Feld) 130 zu erzeugen, das von dem Benutzerendgerät 120 zu dem anderen Gerät 140 zu übertragene erste Daten trägt.

Bei Ausführungsbeispielen kann der Signalgenerator 122 ein Audiosignalgenerator sein. Herkömmlicherweise ist ein solcher Audiosignalgenerator 122 ausgebildet, um ein Audiosignal zur Ansteuerung eines mit dem Benutzerendgerät 120 verbundenen Audiowiedergabegeräts (z.B. Kopfhörer) zu generieren, wobei bei Ausführungsbeispielen anstelle eines Audiowiedergabegeräts der elektromagnetische Schwingkreis 127 mit dem vom Audiosignalgenerators 122 generierten Signal 124 angesteuert wird, um das magnetische Signal 130 zu generieren, das die ersten Daten trägt. Beispielsweise kann der Audiosignalgenerator 122 ein Verstärker sein.

Bei Ausführungsbeispielen kann der elektromagnetische Schwingkreis 127 über eine Audioschnittstelle 128 mit dem Signalgenerator 122 verbunden sein. Beispielsweise kann die Audioschnittstelle 128 eine kabelgebundene Audioschnittstelle sein, wie z.B. eine Klinkenbuchse, ein USB-C^{®}-Audio Anschluss oder ein Lightning^{®}-Audio Anschluss.

Bei dem in Fig. 3a gezeigtem Ausführungsbeispiel weist das Benutzerendgerät 120 den Signalgenerator 122 auf. Alternativ kann der Signalgenerator 122 auch extern zu dem Benutzerendgerät 120 ausgeführt sein. Beispielsweise kann der Signalgenerator 122 in einem mit dem Benutzerendgerät 120 verbundenen drahtlosen Audioadapter implementiert sein, wie dies in Fig. 3b gezeigt ist.

Im Detail zeigt Fig. 3b ein schematisches Blockschaltbild eines Systems 110 mit einem Benutzerendgerät 120 und einem anderen Gerät 140, wobei das Benutzerendgerät 120 drahtlos (z.B. über entsprechende Funkschnittstellen 125, 125` (z.B. Bluetooth, WLAN, Certified Wireless USB)) mit einem drahtlosen Audioadapter 123 verbunden ist, der den Signalgenerator 122 aufweist.

Wie in Fig. 3b zu erkennen ist, kann in diesem Fall der elektromagnetische Schwingkreis 127 über eine Audioschnittstelle 128 des drahtlosen Audioadapters 123 mit dem Signalgenerator 122 verbunden sein. Die Audioschnittstelle 128 kann eine kabelgebundene Audioschnittstelle sein, wie z.B. eine Klinkenbuchse, ein USB-C^{®}-Audio Anschluss oder ein Lightning^{®}-Audio Anschluss.

Der drahtlose Audioadapter 123 kann beispielsweise ein Bluetooth, WLAN oder Certified Wireless USB Audioadapter sein.

Im Folgenden werden weitere Ausführungsbeispiele der vorliegenden Erfindung beschrieben, die sowohl auf Ausführungsbeispiele angewendet werden können, bei denen das Benutzerendgerät 120 den Signalgenerator 122 aufweist, als auch auf Ausführungsbeispiele, bei denen ein mit dem Benutzerendgerät verbundener drahtloser Audioadapter 123 den Signalgenerator 122 aufweist.

Bei Ausführungsbeispielen kann das generierte Signal im Frequenzbereich zwischen 10 Hz und 22 KHz liegen.

Bei Ausführungsbeispielen können die Daten dem generierten Signal 124 aufmoduliert sein, beispielsweise durch FSK (FSK = frequency shift keying, d.t. Frequenzumtastung), MSK (MSK = minimum shift keying) oder GMSK (GMSK = gaussian minimum shift keying). Natürlich kann auch eine andere Modulationsart zum Einsatz kommen, wie z.B. ASK (ASK = amplitude shift keying, dt. Amplitudenumtastung), PSK (PSK = phase shift keying, dt. PHasenumtastung) oder OOK (OOK = on-off keying, dt. eine Art der Amplitudenumtastung, bei der der Träger an- und ausgeschaltet wird).

Bei Ausführungsbeispielen kann das Verhältnis zwischen Trägerfrequenz und Modulationsbandbreite des generierten Signals kleiner sein als 25% (oder beispielsweise kleiner als 20% oder kleiner als 15%).

Bei Ausführungsbeispielen kann der elektromagnetische Schwingkreis ein LC-Schwingkreis sein.

Bei Ausführungsbeispielen kann das Benutzerendgerät 120 ein Mobiltelefon (Smartphone) oder Tablet sein.

Bei Ausführungsbeispielen kann das andere Gerät 140 einen magnetischen Detektor 142 umfassen, der ausgebildet ist, um das magnetische Signal (z.B. magnetische Feld) 130, das die von dem Benutzerendgerät zu dem anderen Gerät 140 zu übertragenen ersten Daten trägt, zu detektieren.

Bei Ausführungsbeispielen kann das andere Gerät 140 ferner einen Microcontroller 144 umfassen, der ausgebildet ist, um das detektierte magnetische Signal (z.B. magnetische Feld) 130 auszuwerten, um die ersten Daten zu empfangen.

Bei Ausführungsbeispielen kann das andere Gerät 140 ferner eine Ausgabeeinrichtung 146 aufweisen, die ausgebildet ist, um ein anderes Signal 148 auszugeben. Der Microcontroller 144 kann dabei ausgebildet sein, um mittels der Ausgabeeinrichtung 146 das andere Signal 148 auszugeben, wobei das andere Signal 148 von dem anderen Gerät 140 zu dem Benutzerendgerät 120 zu übertragene zweite Daten trägt.

Gemäß Ausführungsbeispielen unterscheiden sich das magnetische Signal 130 und das andere Signal 148 in der physikalischen Signalart. So kann das andere Signal 148 beispielsweise ein optisches Signal, ein akustisches Signal oder ein elektromagnetisches Signal (z.B. Funksignal) sein.

Beispielsweise kann die Ausgabeeinrichtung 146 eine optische Ausgabeeinrichtung, wie z.B. eine Leuchtdiode, eine Anzeige oder ein Bildschirm sein, die ausgebildet ist, um ein optisches Signal auszugeben. Alternativ kann die Ausgabeeinrichtung 146 eine akustische Ausgabeeinrichtung sein, wie z.B. ein Lautsprecher, ein Summer, ein Piper oder eine Piezoscheibe. Alternativ kann die Ausgabeeinrichtung 146 eine Funkschnittstelle sein, wie z.B. eine Bluetooth Schnittstelle, eine WLAN (WLAN = wireless local area network) Schnittstelle, eine Mobilfunkschnittstelle (z.B. GSM (GSM = global system mobile), UMTS (UMTS = universal mobile telecommunication system), LTE (LTE = long term evolution)), eine RFID (RFID = radio frequency identification) Schnittstelle oder eine UniDir-MIOTY Schnittstelle sein.

Bei Ausführungsbeispielen kann das Benutzerendgerät 120 einen Detektor 129 aufweisen, der ausgebildet ist, um das andere Signal 148 zu detektieren. Alternativ kann das Benutzerendgerät 120 auch mit einem (externen) Detektor verbunden sein, der ausgebildet ist, um das andere Signal 148 zu detektieren.

Beispielsweise kann das andere Signal 148 ein akustisches Signal sein. In diesem Fall kann der Detektor 129 ein Mikrofon sein, das ausgebildet ist, um das akustisches Signal 148 zu detektieren. Hierbei kann ein Mikrofon des Benutzerendgeräts 120 genutzt werden oder aber auch ein mit dem Benutzerendgerät 120 (z.B. über eine drahtgebundene oder drahtlose Audioschnittstelle) verbundenes Mikrofon, beispielsweise eines Headsets oder Bluetooth Headsets. Alternativ kann das andere Signal 148 ein optisches Signal sein. In diesem Fall kann der Detektor 129 eine Kamera sein, die ausgebildet ist, um das optische Signal zu detektieren. Alternativ kann das andere Signal 148 ein Funksignal sein. In diesem Fall kann der Detektor eine Funkschnittstelle (z.B. Funkmodul) des Benutzerendgeräts oder einer mit dem Benutzerendgerät verbunden Basisstation sein. Das Funkschnittstelle kann beispielsweise eine Bluetooth Schnittstelle, eine WLAN Schnittstelle, eine Mobilfunkschnittstelle, eine RFID Schnittstelle oder eine UniDir-MIOTY Schnittstelle sein.

Bei Ausführungsbeispielen kann das Benutzerendgerät 120 ein Mobiltelefon (Smartphone) oder Tablet sein.

Bei Ausführungsbeispielen können die ersten Daten, die das magnetische Signal 130 trägt, Konfigurationsdaten sein. Der Mikrocontroller 144 kann ausgebildet sein, um das andere Gerät 140 basierend auf den Konfigurationsdaten zu konfigurieren, z.B. in ein drahtloses Netzwerk einzubinden.

Beispielsweise kann das andere Gerät 140 ein benutzerkonfigurierbares Gerät sein, wie z.B. ein loT-Knoten (loT = internet of things, dt. Internet der Dinge) (z.B. ein Sensorknoten oder Aktorknoten) oder eine WLAN Kamera. In diesem Fall können die Konfigurationsdaten eine Information zur Einbindung des benutzerkonfigurierbaren Geräts 140 in ein drahtloses Netzwerk (z.B. Sensornetzwerk oder WLAN) aufweisen, wie z.B. ein Netzwerkname und Netzwerkschlüssel. Natürlich können dem benutzerkonfigurierbaren Gerät 140 durch die Konfigurationsdaten auch andere Parameter zugewiesen werden, wie z.B. einen zu verwenden Frequenzkanal, zu verwendenden Zeitschlitze, oder ein zu verwendendes Sprungmuster (engl. hopping pattern).

Ausführungsbeispiele der vorliegenden Erfindung schaffen somit ein preisgünstiges und allgemein verfügbares Verfahren, Geräte, vor allem Sensorknoten, zu konfigurieren und auszulesen.

Als Benutzerendgeräte 120 sind heutzutage Mobiltelefone allgemein verbreitet. In diesen Mobiltelefonen sind beispielsweise kombinierte Mikrophon/Lautsprecherbuchsen verbaut. Das Mobiltelefon 120 verfügt über einen Ein- und Ausgangsverstärker, der über zumindest einen Ein-, einen Ausgangs- und einen Masseanschluss verfügt.

Um ein Audiosignal auszugeben, wird das Audiosignal im Mobiltelefon 120 an den Verstärker 122 gegeben, dieser gibt dieses Signal 124 verstärkt an die Audioschnittstelle 128, z.B. eine Audiobuchse. Wird an die Audioschnittstelle 128 anstelle eines Lautsprechers oder Kopfhörers ein Schwingkreis 127 angeschlossen, so erzeugt dieser Schwingkreis 127 ein Magnetfeld 130, dessen Zeitverlauf durch das Audiosignal 124 bestimmt wird. Durch Empfang bzw. Detektion dieses Magnetfeldes 130 mit einem einfachen Schwingkreis 142 (z.B. nur eine Spule und ein Kondensator) können Sensorknoten 140 preisgünstig und energieeffizient konfiguriert werden.

im Folgenden werden detaillierte Ausführungsbeispiele der vorliegenden Erfindung beschrieben.

### 1. Verwendung unterschiedlicher Kommunikationskanäle für Konfiguration / Statusabfragen zum Sensorknoten und Bestätigungen / Statusinformationen (Rückmeldung) vom Sensorknoten

Bei Ausführungsbeispielen kann die Konfiguration / Statusabfrage wie oben beschriebenen über ein magnetisches Signal (z.B. Magnetfeld) 130 oder auch über ein Mikrofon am anderen Gerät (z.B. Sensorknoten) 140 erfolgen. Die Kommunikation vom anderen Gerät 140 zum Benutzerendgerät (z.B. Mobiltelefon) 120 kann wie im Folgenden beschrieben erfolgen.

### 1.1. Rückmeldung vom Sensorknoten durch Blinksignale

Bei Ausführungsbeispielen kann auf dem anderen Gerät (z.B. Sensorknoten) 140 beispielsweise eine LED (LED = light emitting diode, dt. Licht emittierende Diode) als Ausgabeeinrichtung 146 verbaut sein. Das optische Signal 148 der LED 146 kann durch einen Benutzer (z.B. eine Person) oder eine Kamera des Benutzerendgeräts (z.B. Mobiltelefons) 120 ausgewertet werden, um z.B. eine erfolgreiche Konfiguration zu erkennen. Im Falle der Auswertung durch eine Kamera 129 des Benutzerendgeräts 120 können auch Geräteinfos zurückgemeldet werden, um darauf angepasste Konfigurationen zu ermöglichen.

Damit reicht ein ganz normales Mobiltelefon für eine bidirektionale Kommunikation.

### 1.2. Rückmeldung vom Sensorknoten über ein Display auf dem Sensorknoten

Bei Ausführungsbeispielen kann das andere Gerät (z.B. Sensorknoten) 140 über ein (OLED, LCD, elnk, etc.) Display als Ausgabeeinrichtung 146 verfügen, wobei auf diesem z.B. ein QR Code angezeigt werden kann, der von der Kamera 129 des Benutzerendgeräts (z.B. Mobiltelefons) 120 aufgenommen und dann ausgewertet werden kann.

Damit reicht ein ganz normales Mobiltelefon für eine bidirektionale Kommunikation.

### 1.3. Rückmeldung vom Sensorknoten über eine unidirektionale Funkverbindung

Bei Ausführungsbeispielen kann die Rückmeldung von dem anderen Gerät 140 zu dem Benutzerendgerät 120 z.B. über einen unidirektionalen Funklink, wie z.B. UniDir-MIOTY, erfolgen. Die Rückmeldung kann dann z.B. bereits über eine Basisstation, die auch im normalen Betrieb des anderen Geräts (z.B. Sensorknotens) 140 als Empfänger dient, empfangen und an den Nutzer bzw. dessen Benutzerendgerät (z.B. Mobiltelefon) 120 weitergegeben werden (z.B. über eine Weboberfläche, eine LED, ein Display, eine Anzeige, oder ein akustisches Signal, etc.).

Damit reicht ein ganz normales Mobiltelefon für eine bidirektionale Kommunikation.

### 1.4. Rückmeldung vom Sensorknoten durch einen Lautsprecher 1 Summer / Piper

Bei Ausführungsbeispielen kann auf dem anderen Gerät (z.B. Sensorknoten) 140 ein Lautsprecher als Ausgabeeinrichtung 146 verbaut sein, wobei in diesem Fall die Rückmeldung vom anderen Gerät (z.B. Sensorknoten) 140 an das Benutzerendgerät (z.B. Mobiltelefon) 120 bzw. ein mit dem Benutzerendgerät verbundenes (Bluetooth) Headset direkt über ein Mikrofon erfolgen kann.

Damit reicht ein ganz normales Mobiltelefon für eine bidirektionale Kommunikation.

Alternativ oder zusätzlich kann ein akustisches Signal direkt an den Benutzer (z.B. eine anwesende Person) gerichtet werden. Das akustische Signal kann beispielsweise ein Quittungston, wie z.B. ein einmaliges piepen für eine erfolgreiche Übertragung oder Konfiguration oder ein zweimaliges piepen für eine fehlerhafte Übertragung oder Konfiguration, oder eine Sprachansage sein.

### 1.5. Als akustischer Signalgeber kann eine Piezoscheibe im Sensorknoten verbaut werden

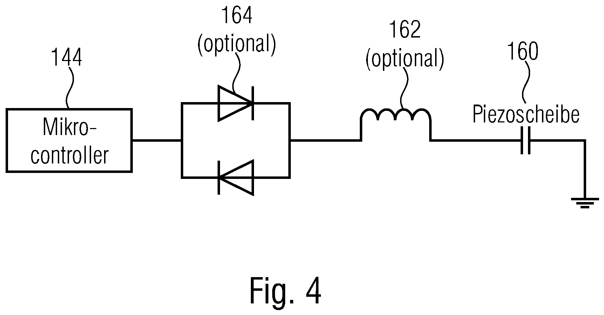

Bei Ausführungsbeispielen kann eine kostengünstige Piezoscheibe (siehe Fig. 4) als akustischer Signalgeber 146 im anderen Gerät (z.B. Sensorknoten) 140 eingesetzt werden. Ein Vorteil der Piezoscheibe ist, dass diese kostengünstig ist. Ein weiterer Vorteil der Piezoscheibe ist, dass keine Öffnung im Gehäuse des anderen Geräts (z.B. Sensorknoten) 140 erforderlich ist, um den Schall der Piezoscheibe nach außen zu leiten.

Als Lautsprecher sind Piezoscheiben hingegen relativ ungeeignet, da sie nur in einem kleinen Frequenzbereich effizient resonant betrieben werden können.

Bei Ausführungsbeispielen kann die Piezoscheibe resonant, schmalbandig im Ultraschallbereich betrieben werden, um ein akustisches Signal 148 zu erzeugen.

Fig. 4 zeigt ein schematisches Blockschaltbild einer Ankopplung einer Piezoscheibe 160 an einen Mikrocontroller 144 des anderen Geräts 140, gemäß einem Ausführungsbeispiel der vorliegenden Erfindung.

Wie in Fig. 4 zu erkennen ist, kann bei Ausführungsbeispielen die Piezoscheibe 160 mit dem Mikrocontroller 144 verbunden sein, beispielsweise über eine Spule 162 und zwei antiparallel geschaltete Dioden 164. Die Piezoscheibe 160 kann aber auch nur über die Spule 162 oder nur über die zwei antiparallel geschaltete Dioden 164 mit dem Mikrocontroller 144 verbunden sein. Natürlich kann die Piezoscheibe auch direkt (d.h. ohne Spule 162 oder Dioden 164) mit dem Mikrocontroller 144 verbunden sein.

Bei Ausführungsbeispielen kann die Piezoscheiben also über eine Spule direkt mit dem Mikrocontroller 144 verbunden sein. Die Spule bildet mit der Kapazität der Piezoscheibe einen Serienresonanzkreis. Damit kann die Lautstärke der Piezoscheibe erhöht werden.

Bei Ausführungsbeispielen kann die Piezoscheibe an das Gehäuse des anderen Geräts 140 geklebt werden. Damit ist keine Öffnung im Gehäuse des anderen Geräts (Sensorknotengehäuse) nötig. Das akustische Signal (Schall) 148 wird von der Piezoscheibe erzeugt und durch das Gehäuse des anderen Geräts 140 nach außen übertragen

Bei Ausführungsbeispielen kann die Piezoscheibe (über eine Spule oder ohne Spule) über zwei antiparallel geschaltete Dioden (siehe Fig. 4) mit dem Mikrocontroller 144 verbunden werden. Damit wird durch die Schwellspannung der Dioden schaltungstechnisch verhindert, dass kleine Signale von der Piezoscheibe (kann analog auch für einen Lautsprecher anstelle der Piezoscheibe umgesetzt werden) im Mikrocontroller 144 aufgenommen werden können. Dieses verhindert die Möglichkeit des Abhörens, bei der die Piezoscheibe als Mikrofon fungiert und den Raumschall aufnimmt, während der Mikrocontroller 144 das Signal beispielsweise mit einem in dem Mikrocontroller 144 eingebauten Analog zu Digital Wandler (ADC) abtastet und dieses über Funk weiterleitet.

Bei Ausführungsbeispielen kann alternativ oder zusätzlich ein akustisches Signal direkt an die Benutzer (z.B. eine anwesende Person) gerichtet werden. Das akustische Signal kann beispielsweise ein Quittungston, wie z.B. ein einmaliges piepen für eine erfolgreiche Übertragung oder Konfiguration oder ein zweimaliges piepen für eine fehlerhafte Übertragung oder Konfiguration, oder eine Sprachansage sein.

### 2. Verfahren zur Konfiguration

Die im Folgenden beschriebenen Ausführungsbeispiele der Konfiguration des anderen Geräts 140 sind auch miteinander kombinierbar.

### 2.1. Konfiguration von Identifikations- und Zugangsinformationen zur Integration in Kommunikationsnetz

Zur Veranschaulichung sei im Folgenden von folgendem Szenario ausgegangen. Ein neues Gerät (z.B. Sensorknoten) soll an ein Funkkommunikationsnetzwerk angebunden werden. Hierzu kann es erforderlich sein, dem Gerät vor Beitritt bestimmte Netzwerkspezifische Informationen mitzuteilen, damit ein Beitritt ermöglicht wird. Dabei kann es sich z.B. um Identifikationsnummer, kryptographische Schlüssel, Kommunikationsparameter (z.B. Frequenzen, Modi, Profile), etc. handeln. Insbesondere bei Knoten mit unidirektionaler Funkschnittstelle (kein Empfang möglich) kann so eine Integration in Netzwerke mit variablen/bei Knotenherstellung nicht bekannten Parametern erfolgen.

### 2.1.1. Konfiguration via Webinterface der Basisstation

Bei Ausführungsbeispielen kann die Basisstation des Funknetzwerkes kann ein Webinterface für den Nutzer bereitstellen. Die Funktion der Konfiguration von neuen Geräten (z.B. Sensorknoten) kann dann über dieses Webinterface gesteuert werden. Die hierzu notwendige Audioausgabe über den Browser ist bei praktisch allen modernen Mobiltelefonen möglich. Auch ein optionales Einlesen von QR Codes oder des Mikrofons (für bidirektionale Kommunikation) ist mittels Browser möglich.

### Ablaufbeispiel:

1. Nutzer öffnet Webinterface der Basisstation im Browser seines Benutzerendgeräts (z.B. Mobiltelefons, Notebook, Tablet, etc.) und navigiert ggf. zu der Konfigurationsseite für neue Geräte.
2. Optional können durch den Nutzer weitere Parameter für das Gerät eingeben werden (z.B. Art des Gerätes, Einteilung in Subnetze, etc.) und/oder Informationen können durch scannen z.B. eines QR Codes auf dem Gerät eingelesen werden.
3. Optional können zusätzliche Gerätespezifische Parameter angegeben werden, die dem Gerät im gleichen Zuge mitgeteilt werden sollen. Beispielsweise die Übertragungshäufigkeit für Sensorwerte, Alarmschwellen (Übertragung wird ausgelöst), verschiedene Betriebsmodi etc.
4. Nutzer wird in Webinterface aufgefordert sein Benutzerendgerät an das zu konfigurierende Gerät zu halten.
5. Nutzer bestätigt und startet Konfigurationsübertragung in dem Webinterface.
6. Übertragung der Informationen auf das zu konfigurierende Gerät.
7. Quittierung der erfolgten Konfiguration durch Basisstation und/oder Sensorknoten z.B. optisch (LED, Display, etc.) oder akustisch (Piepton, Sprachansage, etc.).

### 2.1.2. Konfiguration via Webseite des Herstellers/Dienstanbieters/etc.

Bei Ausführungsbeispielen kann die Konfigurationswebseite alternativ auch z.B. von dem Hersteller eines Geräts (z.B. Sensorknoten) oder einem Dienstanbieter für das Netzwerk im Internet verfügbar sein. Der Nutzer meldet sich dann dort an und kann Geräte zu seinem Konto hinzufügen. Der Ablauf ist im Übrigen identisch zu der Konfiguration via Webinterface der Basisstation.

### 2.1.3. Konfiguration via Taster an Basisstation (unidirektionale Konfigurationsschnittstelle)

Bei Ausführungsbeispielen kann in der Basisstation ein Schwingkreis/Lautsprecher verbaut sein, wobei die Konfiguration direkt an der Basisstation erfolgen kann.

### Ablaufbeispiel:

1. Nutzer hält neues Gerät (z.B. Sensorknoten) an die Basisstation.
2. Nutzer betätigt Konfigurationstaster an Basisstation.
3. Basisstation überträgt relevante Parameter auf den Sensorknoten.
4. Optional: Sensorknoten bestätigt Konfiguration durch Funkübertragung an Basisstation (normale Funkschnittstelle).
5. Quittierung der erfolgten Konfiguration durch Basisstation und/oder Sensorknoten z.B. optisch (LED, Display, etc.) oder akustisch (Piepton, Sprachansage, etc.).

### 2.1.4. Konfiguration via Taster an Basisstation (bidirektionale Konfigurationsschnittstelle)

Bei Ausführungsbeispielen können die Konfigurationsschnittstellen im Sensorknoten und der Basisstation bidirektional sein. In diesem Fall können über die Konfigurationsschnittstellen auch Daten von dem Sensorknoten an die Basisstation übertragen werden.

### Ablaufbeispiel:

1. Nutzer hält neues Gerät (z.B. Sensorknoten) an die Basisstation.
2. Nutzer betätigt Konfigurationstaster an der Basisstation.
3. Basisstation fragt Informationen von Sensorknoten über Konfigurationsschnittstelle an.
4. Sensorknoten überträgt relevante Parameter an die Basisstation.
5. Optional: Sensorknoten bestätigt Konfiguration durch Funkübertragung an Basisstation (normale Funkschnittstelle).
6. Quittierung der erfolgten Konfiguration durch die Basisstation und/oder den Sensorknoten.

### 2.1.5, Vorbereitete Konfiguration ausbringen

Bei Ausführungsbeispielen können Konfigurationssignale für ein oder mehrere Geräte zentral vorgeneriert werden (z.B. bei Herstellung oder Netzwerkplanung etc.). Die Signale können beispielsweise als Audiodateien erzeugt und dann mit verschiedensten Abspielgeräten wiedergegeben werden, um am zu konfigurierenden Gerät die Übertragung durchzuführen. Idealerweise sind hierfür nicht komprimierte oder verlustfreie Formate zu wählen. Diese Audiodateien können hierzu auch beispielsweise über Messagingdienste oder E-Mail verschickt werden.

### Ablaufbeispiel:

1. Konfigurationsinformationen werden bei Netzwerkplanung zentral erzeugt und als Audiodateien abgespeichert.
2. Audiodateien werden auf Abspielgeräte der Installateure geladen (extra Abspielgeräte oder ohnehin vorhandene Smartphones, PDAs, MP3-Player etc.).
3. Installateure bringen zu konfigurierende Geräte an, halten das Abspielgerät an die zu konfigurierenden Geräts und spielen die vorgenerierte Audiodatei ab.
4. Quittierung der erfolgten Konfiguration kann beispielsweise durch eine LED oder ein Piepton erfolgen.

### 2.1.6 Konfiguration über Telefonverbindung

Bei Ausführungsbeispielen kann eine Wiedergabe eines Konfigurationssignals über eine Telefonverbindung erfolgen. Hierbei muss jedoch die Einschränkung durch Kompression und Verzerrung etc. berücksichtigt werden. Das Signal kann beispielsweise nur Frequenzen im Bereich der menschlichen Stimme benutzen und psychoakustische Filterbereiche von Kompressionsalgorithmen aussparen.

### Ablaufbeispiel:

1. Kunde ruft bei Hotline eines Anbieters an, um ein Problem mit einem Gerät zu melden.
2. Kundendienst Mitarbeiter kann geeignete Konfiguration für das Gerät erzeugen und Kunden auffordern, der Telefonhörer oder das Mobiltelefon an das Gerät zu halten.
3. Kundendienst Mitarbeiter spiel die Konfiguration direkt über das Telefon ab.
4. Quittierung der erfolgten Konfiguration kann beispielsweise durch einen Piepton erfolgen.

### 2.2. Änderung von sicherheitsrelevanten Informationen

Zur Veranschaulichung sei im Folgenden von folgendem Szenario ausgegangen. Ein Gerät (z.B. Sensorknoten) wird aus dem Handel, vom Hersteller oder auch von einem Vornutzer erworben. Es kann nicht sichergestellt werden, dass evtl. vorkonfigurierte Identifikationsnummern oder kryptographische Schlüssel keinen Dritten bekannt sind. Eine Änderung dieser sicherheitsrelevanten Informationen ist daher notwendig.

Die Konfiguration kann dabei z.B. nur innerhalb eines Zeitfensters von einigen Minuten nach einem Reset durch Trennen der Stromversorgung (Batterie entfernen und neu einlegen etc.) gestattet sein um eine Umkonfiguration durch nicht autorisierte Personen zu erschweren (Batterie z.B. in Gerät verbaut, verschraubt, etc.). Außerdem können bei dem Reset alle vorherigen Parameter gelöscht werden um ein Auslesen von vorherigen Parametern zu verhindern (bei bidirektionaler Konfigurationsschnittstelle).

Eine spätere Änderung der Konfiguration ohne Reset kann nur noch mit Authentisierung und/oder Verschlüsselung auf Basis der initialen Konfiguration gestattet werden. Wurde ein Sensorknoten z.B. über das Webinterface einer Basisstation initial konfiguriert, so kann diese Basisstation bei Änderungen der Konfiguration auf die initialen Informationen zurückgreifen und die neue Konfiguration entsprechend authentisieren und/oder verschlüsseln.

Um ein Abgreifen der neuen Konfiguration während der Übertragung durch Dritte (in unmittelbarer Nähe) zu vermeiden kann bei bidirektionaler Konfigurationsschnittstelle ein etabliertes Verfahren zur Schlüsselaushandlung (z.B. Diffie-Hellman, RSA, etc.) und anschließende verschlüsselte Übertragung verwendet werden. Bei unidirektionaler Konfigurationsschnittstelle kann ein Anfangsschlüssel (ist bei Auslieferung/Reset aktiv), der bekannt oder auf dem Sensorknoten angebracht ist verwendet werden.

### Ablaufbeispiel:

1. Nutzer legt Batterie neu ein oder trennt Batterie kurzzeitig von Gerät.
2. Nutzer öffnet eine App oder Webseite für die Gerätekonfiguration.
3. Optional: App oder Webseite erzeugt geeignete neue Parameter.
4. Optional: Nutzer wählt/editiert Parameter explizit.
5. Nutzer hält Mobiltelefon an das Gerät und startet die Konfiguration.
6. Optional: Schlüsselaushandlung bei bidirektionaler Konfigurationsschnittstelle.
7. Übertragung der Parameter von dem Mobiltelefon an das Gerät.
8. Optional: Rückmeldung des Geräts bei bidirektionaler Konfigurationsschnittstelle.
9. Quittierung der Konfiguration durch Gerät und/oder Mobiltelefon.

### 2.3. Konfiguration von Geräteparametern

Zur Veranschaulichung sei im Folgenden von folgendem Szenario ausgegangen. Die Betriebsparameter eines Geräts sollen durch den Nutzer konfigurierbar sein. Das Gerät hat entweder keine geeigneten Bedienelemente oder die Konfiguration über ein Mobiltelefon ist einfacher/schneller realisierbar. Hierbei kann es sich auch um (abgesehen von der Konfigurationsschnittstelle) nicht Kommunikationsfähige Geräte handeln (z.B. Uhren, Wecker, Infodisplays etc.). So kann z.B. die Uhrzeit schnell und einfach von dem Mobiltelefon (erhält korrekte Zeit über Mobilfunknetz oder Internet) an Uhren verteilt werden (Zeitumstellung etc.).

### Ablaufbeispiel:

1. Nutzer öffnet App oder Webseite für Gerätekonfiguration.
2. Optional: Nutzer wählt und/oder editiert zu konfigurierende Parameter.
3. Nutzer hält Mobiltelefon an das Gerät und startet die Konfiguration.
4. Übertragung der Parameter von dem Mobiltelefon an das Gerät.
5. Optional: Rückmeldung des Geräts bei bidirektionaler Konfigurationsschnittstelle.
6. Quittierung der Konfiguration durch das Gerät und/oder Mobiltelefon.

### 3. Aktivierung durch magnetische Kopplung

Bei Ausführungsbeispielen kann das andere Gerät 140 einen Mikrocontroller 144 und einen LC-Schwingkreis 142 zum Detektieren des magnetischen Signals 130 aufweisen, wobei der LC-Schwingkreis 142 direkt mit einem Eingang oder Eingängen eines Komparators des Mikrocontrollers 144 verbunden sein kann. Der Mikrocontroller 144 kann dabei ansprechend auf einen Interrupt des Komparators von einem Betriebsmodus mit reduziertem Stromverbrauch in einen normalen Betriebsmodus wechseln.

Bei Ausführungsbeispielen kann somit durch die magnetische Kopplung sehr einfach ein Interrupt an einem Mikrocontroller 144 ausgelöst werden. Dies erlaubt es den Mikrocontroller 144 in einem stromsparenden Zustand zu versetzen und durch ein Aktivierungssignal über magnetische Kopplung aufzuwecken. In einem zweiten Schritt kann dann beispielsweise eine Datenübertragung mittels einer herkömmlichen Nahfeldübertragungstechnik (NFC etc.) stattfinden. Der Sender/Empfänger für die Datenübertragung muss somit nicht dauerhaft aktiviert sein und der Stromverbrauch im Ruhezustand kann reduziert werden.

Alternativ kann durch das Aktivierungssignal auch eine andere Aktion ausgelöst werden, wie z.B. ein Gerät in einen aktiven Zustand zu versetzen, das Aussenden einer Funkübertragung zu veranlassen etc. Damit kann beispielsweise ein gekapseltes Gerät (wasserdicht etc.) ohne spezielle, abgedichtete Bedienelemente eingeschalten werden, wobei der Stromverbrauch im ausgeschalteten Zustand minimal ist.

### 4. Weitere Ausführungsbeispiele

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele, nicht zugehörig zu der beanspruchten Erfindung, umfassen das Computerprogramm zum Durchführen eines der hierin beschriebenen Verfahren, wobei das Computerprogramm auf einem maschinenlesbaren Träger gespeichert ist.

Ein weiteres Ausführungsbeispiel der Verfahren, nicht zugehörig zu der beanspruchten Erfindung, ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des Verfahrens, nicht zugehörig zu der beanspruchten Erfindung, ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel, nicht zugehörig zu der beanspruchten Erfindung, umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel, nicht zugehörig zu der beanspruchten Erfindung, umfasst einen Computer, auf dem das Computerprogramm zum Durchführen eines der hierin beschriebenen Verfahren installiert ist.

Ein weiteres Ausführungsbeispiel, nicht zugehörig zu der beanspruchten Erfindung, umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100) zur Übertragung von Daten zwischen einem Benutzerendgerät (120) und einem anderen Gerät, wobei das Verfahren (100) aufweist:
Generieren (102) eines Signals zum Ansteuern einer elektromagnetischen Funktionseinheit, wobei die elektromagnetische Funktionseinheit ein Aktuator (126) eines Lautsprechers (150) des Benutzerendgeräts (120) ist oder wobei die elektromagnetische Funktionseinheit ein mit dem Benutzerendgerät (120) verbundener elektromagnetischer Schwingkreis (127) ist,
Ansteuern (104) der elektromagnetischen Funktionseinheit mit dem generierten Signal (124), um durch die elektromagnetische Funktionseinheit ein magnetisches Signal (130) zu erzeugen, das von dem Benutzerendgerät (120) zu dem anderen Gerät zu übertragene erste Daten trägt,
Detektieren (106) eines von dem anderen Gerät (140) ausgegebenen anderen Signals (148), wobei das andere Signal (148) von dem anderen Gerät (140) zu dem Benutzerendgerät (120) zu übertragene zweite Daten trägt,
wobei sich das magnetische Signal (130) und das andere Signal (148) in der physikalischen Signalart unterscheiden;
**dadurch gekennzeichnet, dass** die ersten Daten Konfigurationsdaten zur Konfiguration des anderen Geräts (140) sind,
das Verfahren (100) ferner einen Schritt des Detektierens des magnetischen Signals (130) mit einem elektromagnetischen Schwingkreis (142) des anderen Geräts (140) aufweist, um die ersten Daten zu empfangen,
das Verfahren (100) ferner einen Schritt des Konfigurierens des anderen Geräts (140) basierend auf den empfangenen ersten Daten aufweist.

2. Verfahren (100) nach dem vorangehenden Anspruch,
wobei Daten von dem anderen Gerät zu dem Benutzerendgerät ausschließlich über ein Signal übertragen werden, das sich in der physikalischen Signalart von dem magnetischen Signal (130) unterscheidet.

3. Verfahren nach einem der vorangehenden Ansprüche,
wobei keine magnetischen Signale von dem anderen Gerät zu dem Benutzerendgerät übertragen werden.

4. Verfahren (100) nach einem der vorangehenden Ansprüche,
wobei das andere Signal (148) von dem anderen Gerät (140) ansprechend auf das magnetische Signal ausgeben wird.

5. Verfahren (100) nach einem der vorangehenden Ansprüche,
wobei das andere Signal (148) ein optisches Signal, ein akustisches Signal oder ein elektromagnetisches Signal ist.

6. Verfahren (100) nach einem der vorangehenden Ansprüche,
wobei das andere Signal (148) von dem Benutzerendgerät (120) oder von einem mit dem Benutzerendgerät (120) verbundenen Gerät detektiert wird.

7. Verfahren (100) nach einem der Ansprüche 1 bis 6,
wobei das andere Signal (148) ein akustisches Signal (148) ist,
wobei das akustische Signal (148) mittels eines Mikrofons (129) des Benutzerendgeräts (120) oder eines mit dem Benutzerendgerät (120) verbundenen Mikrofons detektiert wird, um die zweiten Daten zu empfangen, die das akustische Signal (148) trägt.

8. Verfahren (100) nach Anspruch 7,
wobei das akustische Signal (148) mittels eines akustischen Signalgebers (146) des anderen Geräts (140) ausgegeben wird.

9. Verfahren (100) nach Anspruch 8,
wobei der akustische Signalgeber (146) ein Lautsprecher, ein Summer, ein Pieper oder eine Piezoscheibe ist.

10. Verfahren (100) nach einem der vorangehenden Ansprüche,
wobei die elektromagnetische Funktionseinheit ein mit dem Benutzerendgerät (120) verbundener elektromagnetischer Schwingkreis (127) ist,
wobei der elektromagnetische Schwingkreis (127) über eine Audioschnittstelle (128) des Benutzerendgeräts (120) mit dem Benutzerendgerät (120) verbunden ist, oder wobei der elektromagnetische Schwingkreis (127) über eine Audioschnittstelle (128) eines mit dem Benutzerendgerät (120) verbundenen drahtlosen Audioadapters (123) verbunden ist.

11. Verfahren (100) nach einem der vorangehenden Ansprüche,
wobei das Konfigurieren des anderen Geräts (140) Verbinden des anderen Geräts (140) mit einem Kommunikationsnetzwerk unter Verwendung der empfangen ersten Daten umfasst.

12. Verfahren (100) nach einem der vorangehenden Ansprüche,
wobei das andere Gerät (140) ansprechend auf eine Detektion des magnetischen Signals (130) von einem Betriebsmodus mit reduziertem Stromverbrauch in einen normalen Betriebsmodus wechselt,
wobei das Verfahren (100) ferner einen Schritt des Sendens eines weiteren Signals umfasst, wobei das weitere Signal von dem Benutzerendgerät (120) zu dem anderen Gerät zu übertragene Dritte Daten trägt,
wobei sich das magnetische Signal (130) und das weitere Signal in der physikalischen Signalart unterscheiden.

13. Anderes Gerät (140), mit folgenden Merkmalen:
einem Mikrocontroller (144),
einem elektromagnetischen Schwingkreis (142) zum Detektieren eines magnetischen Signals (130),
einer Ausgabeeinrichtung (146) zum Ausgeben eines anderen Signals (148),
wobei der Mikrocontroller (144) ausgebildet ist, um das von dem elektromagnetischen Schwingkreis (142) detektierte magnetische Signal auszuwerten, um von einem Benutzerendgerät (120) zu dem anderen Gerät zu übertragene erste Daten zu empfangen, die das magnetische Signal (130) trägt,
wobei der Mikrocontroller (144) ausgebildet ist, um mittels der Ausgabeeinrichtung (146) das andere Signal (148) auszugeben, wobei das andere Signal (148) von dem anderen Gerät zu dem Benutzerendgerät (120) zu übertragene zweite Daten trägt,
wobei sich das magnetische Signal (130) und das andere Signal (148) in der physikalischen Signalart unterscheiden,
**dadurch gekennzeichnet, dass**
die ersten Daten Konfigurationsdaten zur Konfiguration des anderen Geräts (140) sind,
der Mikrocontroller (144) konfiguriert ist, um das andere Gerät (140) basierend auf den Konfigurationsdaten zu konfigurieren,
der Mikrocontroller (144) konfiguriert ist, um das andere Gerät (140) basierend auf den Konfigurationsdaten in ein drahtloses Netzwerk einzubinden.

14. Anderes Gerät (140) nach dem vorangehenden Anspruch,
wobei das andere Signal (148) ein optisches Signal, ein akustisches Signal oder ein elektromagnetisches Signal ist.

15. Anderes Gerät (140), mit folgenden Merkmalen:
einem Mikrocontroller (144),
einem elektromagnetischen Schwingkreis (142) zum Detektieren eines magnetischen Signals (130),
einer Ausgabeeinrichtung (146) zum Ausgeben eines anderen Signals (148),
wobei der Mikrocontroller (144) ausgebildet ist, um das von dem elektromagnetischen Schwingkreis (142) detektierte magnetische Signal auszuwerten, um von einem Benutzerendgerät (120) zu dem anderen Gerät zu übertragene erste Daten zu empfangen, die das magnetische Signal (130) trägt,
wobei der Mikrocontroller (144) ausgebildet ist, um mittels der Ausgabeeinrichtung (146) das andere Signal (148) auszugeben, wobei das andere Signal (148) von dem anderen Gerät zu dem Benutzerendgerät (120) zu übertragene zweite Daten trägt,
wobei sich das magnetische Signal (130) und das andere Signal (148) in der physikalischen Signalart unterscheiden,
**dadurch gekennzeichnet, dass**
die ersten Daten Konfigurationsdaten zur Konfiguration des anderen Geräts (140) sind,
der Mikrocontroller (144) konfiguriert ist, um das andere Gerät (140) basierend auf den Konfigurationsdaten zu konfigurieren,
das andere Signal (148) ein akustisches Signal ist,
die Ausgabeeinrichtung (146) ein akustischer Signalgeber ist,
wobei der akustische Signalgeber eine Piezoscheibe ist.

## Claims

1. A method (100) for transmitting data between a user terminal (120) and another apparatus, the method (100) comprising:
generating (102) a signal for driving an electromagnetic functional unit, the electromagnetic functional unit being an actuator (126) of a loudspeaker (150) of the user terminal (120) or the electromagnetic functional unit being an electromagnetic oscillating circuit (127) connected to the user terminal (120),
driving (104) the electromagnetic functional unit by the generated signal (124) to produce, by the electromagnetic functional unit, a magnetic signal (130) which carries first data to be transmitted from the user terminal (120) to the other apparatus,
detecting (106) another signal (148) output by the other apparatus (140), the other signal (148) carrying second data to be transmitted from the other apparatus (140) to the user terminal (120),
wherein the magnetic signal (130) and the other signal (148) differ in the physical signal type;
**characterized in that**
the first data are configuration data for configuring the other apparatus (140),
the method (100) further comprises a step of detecting the magnetic signal (130) by an electromagnetic oscillating circuit (142) of the other apparatus (140) to receive the first data,
the method (100) further comprises a step of configuring the other apparatus (140) based on the received first data.

2. The method (100) in accordance with the preceding claim,
wherein data are transmitted from the other apparatus to the user terminal exclusively via a signal which differs from the magnetic signal (130) in the physical signal type.

3. The method in accordance with any of the preceding claims,
wherein no magnetic signals are transmitted from the other apparatus to the user terminal.

4. The method (100) in accordance with any of the preceding claims,
wherein the other signal (148) is output from the other apparatus (140) responsive to the magnetic signal.

5. The method (100) in accordance with any of the preceding claims,
wherein the other signal (148) is an optical signal, acoustic signal or electromagnetic signal.

6. The method (100) in accordance with any of the preceding claims,
wherein the other signal (148) is detected by the user terminal (120) or by an apparatus connected to the user terminal (120).

7. The method (100) in accordance with any of claims 1 to 6,
wherein the other signal (148) is an acoustic signal (148),
wherein the acoustic signal (148) is detected by means of a microphone (129) of the user terminal (120) or a microphone connected to the user terminal (120) to receive the second data which the acoustic signal (148) carries.

8. The method (100) in accordance with claim 7,
wherein the acoustic signal (148) is output by means of an acoustic signal generator (146) of the other apparatus (140).

9. The method (100) in accordance with claim 8,
wherein the acoustic signal generator (146) is a loudspeaker, buzzer, beeper or piezo disk.

10. The method (100) in accordance with any of the preceding claims,
wherein the electromagnetic functional unit is an electromagnetic oscillating circuit (127) connected to the user terminal (120),
wherein the electromagnetic oscillating circuit (127) is connected to the user terminal (120) via an audio interface (128) of the user terminal (120), or wherein the electromagnetic oscillating circuit (127) is connected via an audio interface (128) of a wireless audio adapter (123) connected to the user terminal (120).

11. The method (100) in accordance with any of the preceding claims,
wherein configuring the other apparatus (140) comprises connecting the other apparatus (140) to a communication network using the received first data.

12. The method (100) in accordance with any of the preceding claims,
wherein the other apparatus (140) switches from an operating mode at reduced current consumption to a normal operating mode responsive to detecting the magnetic signal (130),
the method (100) further comprising a step of transmitting a further signal, the further signal carrying third data to be transmitted from the user terminal (120) to the other apparatus,
wherein the magnetic signal (130) and the further signal differ in the physical signal type.

13. Another apparatus (140), comprising:
a microcontroller (144),
an electromagnetic oscillating circuit (142) for detecting a magnetic signal (130),
output means (146) for outputting another signal (148),
wherein the microcontroller (144) is configured to evaluate the magnetic signal detected by the electromagnetic oscillating circuit (142) to receive first data, which the magnetic signal (130) carries, to be transmitted from a user terminal (120) to the other apparatus,
wherein the microcontroller (144) is configured to output the other signal (148) by means of the output means (146), the other signal (148) carrying second data to be transmitted from the other apparatus to the user terminal (120),
wherein the magnetic signal (130) and the other signal (148) differ in the physical signal type,
**characterized in that**
the first data are configuration data for configuring the other apparatus (140),
the microcontroller (144) is configured to configure the other apparatus (140) based on the configuration data,
the microcontroller (144) is configured to integrate the other apparatus (140) into a wireless network based on the configuration data.

14. The other apparatus (140) in accordance with the preceding claim,
wherein the other signal (148) is an optical signal, acoustic signal or electromagnetic signal.

15. Another apparatus (140), comprising:
a microcontroller (144),
an electromagnetic oscillating circuit (142) for detecting a magnetic signal (130),
output means (146) for outputting another signal (148),
wherein the microcontroller (144) is configured to evaluate the magnetic signal detected by the electromagnetic oscillating circuit (142) to receive first data, which the magnetic signal (130) carries, to be transmitted from a user terminal (120) to the other apparatus,
wherein the microcontroller (144) is configured to output the other signal (148) by means of the output means (146), the other signal (148) carrying second data to be transmitted from the other apparatus to the user terminal (120),
wherein the magnetic signal (130) and the other signal (148) differ in the physical signal type,
**characterized in that**
the first data are configuration data for configuring the other apparatus (140),
the microcontroller (144) is configured to configure the other apparatus (140) based on the configuration data,
the other signal (148) is an acoustic signal (148),
the output means (146) is an acoustic signal generator,
wherein the acoustic signal generator is a piezo disk.

## Revendications

1. Procédé (100) de transmission de données entre un terminal d'utilisateur (120) et un autre appareil, dans lequel le procédé (100) présente le fait de:
générer (102) un signal destiné à commander une unité fonctionnelle électromagnétique, où l'unité fonctionnelle électromagnétique est un actionneur (126) d'un haut-parleur (150) du terminal d'utilisateur (120) ou bien où l'unité fonctionnelle électromagnétique est un circuit résonant électromagnétique (127) connecté au terminal d'utilisateur (120),
commander (104) l'unité fonctionnelle électromagnétique par le signal généré (124) pour générer, par l'unité fonctionnelle électromagnétique, un signal magnétique (130) qui porte des premières données à transmettre du terminal d'utilisateur (120) à l'autre appareil,
détecter (106) un autre signal (148) émis par l'autre appareil (140), où l'autre signal (148) porte des deuxièmes données à transmettre de l'autre appareil (140) au terminal d'utilisateur (120),
dans lequel le signal magnétique (130) et l'autre signal (148) diffèrent par le type de signal physique;
**caractérisé par le fait que**
les premières données sont des données de configuration destinées à configurer l'autre appareil (140),
le procédé (100) présente par ailleurs une étape consistant à détecter le signal magnétique (130) par un circuit résonant électromagnétique (142) de l'autre appareil (140) pour recevoir les premières données,
le procédé (100) présente par ailleurs une étape consistant à détecter l'autre appareil (140) sur base des premières données reçues.

2. Procédé selon la revendication précédente,
dans lequel les données sont transmises de l'autre appareil au terminal d'utilisateur exclusivement par l'intermédiaire d'un signal qui diffère du signal magnétique (130) par le type de signal physique.

3. Procédé selon l'une des revendications précédentes,
dans lequel il n'est pas transmis de signaux magnétiques de l'autre appareil au terminal d'utilisateur.

4. Procédé (100) selon l'une des revendications précédentes,
dans lequel l'autre signal (148) est émis par l'autre appareil (140) en réaction au signal magnétique.

5. Procédé (100) selon l'une des revendications précédentes,
dans lequel l'autre signal (148) est un signal optique, un signal acoustique ou un signal électromagnétique.

6. Procédé (100) selon l'une des revendications précédentes,
dans lequel l'autre signal (148) est détecté par le terminal d'utilisateur (120) ou par un appareil connecté au terminal d'utilisateur (120).

7. Procédé (100) selon l'une des revendications 1 à 6,
dans lequel l'autre signal (148) est un signal acoustique (148), dans lequel le signal acoustique (148) est détecté au moyen d'un microphone (129) du terminal d'utilisateur (120) ou d'un microphone connecté au terminal d'utilisateur (120) pour recevoir les deuxièmes données que porte le signal acoustique (148).

8. Procédé (100) selon la revendication 7,
dans lequel le signal acoustique (148) est émis au moyen d'un transmetteur de signal acoustique (146) de l'autre appareil (140).

9. Procédé (100) selon la revendication 8,
dans lequel le transmetteur de signal acoustique (146) est un haut-parleur, une alarme sonore, un bip sonore ou un disque piézoélectrique.

10. Procédé (100) selon l'une des revendications précédentes,
dans lequel l'unité fonctionnelle électromagnétique est un circuit résonant électromagnétique (127) connecté au terminal d'utilisateur (120),
dans lequel le circuit oscillant électromagnétique (127) est connecté au terminal d'utilisateur (120) par l'intermédiaire d'une interface audio (128) du terminal d'utilisateur (120), ou dans lequel le circuit oscillant électromagnétique (127) est connecté par l'intermédiaire d'une interface audio (128) d'un adaptateur audio sans fil (123) connecté au terminal d'utilisateur (120).

11. Procédé (100) selon l'une des revendications précédentes,
dans lequel la configuration de l'autre appareil (140) comporte le fait de connecter l'autre appareil (140) à un réseau de communication à l'aide des premières données reçues.

12. Procédé (100) selon l'une des revendications précédentes,
dans lequel l'autre appareil (140) commute d'un mode de fonctionnement à consommation réduite de courant à un mode de fonctionnement normal en réaction à une détection du signal magnétique (130),
dans lequel le procédé (100) comporte par ailleurs une étape consistant à envoyer un autre signal, où l'autre signal porte des troisièmes données à transmettre du terminal d'utilisateur (120) à l'autre appareil,
dans lequel le signal magnétique (130) et l'autre signal diffèrent par le type de signal physique.

13. Autre appareil (140), aux caractéristiques suivantes:
un microcontrôleur (144),
un circuit résonant électromagnétique (142) destiné à détecter un signal magnétique (130),
un moyen d'émission (146) destiné à émettre un autre signal (148),
dans lequel le microcontrôleur (144) est conçu pour évaluer le signal magnétique détecté par le circuit résonant électromagnétique (142) pour recevoir des premières données à transmettre d'un terminal d'utilisateur (120) à l'autre appareil que porte le signal magnétique (130),
dans lequel le microcontrôleur (144) est conçu pour émettre l'autre signal (148) au moyen du moyen d'émission (146), dans lequel l'autre signal (148) porte des deuxièmes données à transmettre de l'autre appareil au terminal d'utilisateur (120),
dans lequel le signal magnétique (130) et l'autre signal (148) diffèrent par le type de signal physique,
**caractérisé par le fait que**
les premières données sont des données de configuration destinées à configurer l'autre appareil (140),
le microcontrôleur (144) est configuré pour configurer l'autre appareil (140) sur base des données de configuration,
le microcontrôleur (144) est configuré pour intégrer l'autre appareil (140) dans un réseau sans fil sur base des données de configuration.

14. Autre appareil (140) selon la revendication précédente,
dans lequel l'autre signal (148) est un signal optique, un signal acoustique ou un signal électromagnétique.

15. Autre appareil (140), aux caractéristiques suivantes:
un microcontrôleur (144),
un circuit résonant électromagnétique (142) destiné à détecter un signal magnétique (130),
un moyen d'émission (146) destiné à émettre un autre signal (148),
dans lequel le microcontrôleur (144) est conçu pour évaluer le signal magnétique détecté par le circuit résonant électromagnétique (142) pour recevoir des premières données à transmettre d'un terminal d'utilisateur (120) à l'autre appareil que porte le signal magnétique (130),
dans lequel le microcontrôleur (144) est conçu pour émettre l'autre signal (148) au moyen du moyen d'émission (146), dans lequel l'autre signal (148) porte des deuxièmes données à transmettre de l'autre appareil au terminal d'utilisateur (120),
dans lequel le signal magnétique (130) et l'autre signal (148) diffèrent par le type de signal physique,
**caractérisé par le fait que**
les premières données sont des données de configuration destinées à configurer l'autre appareil (140),
le microcontrôleur (144) est configuré pour configurer l'autre appareil (140) sur base des données de configuration,
l'autre signal (148) est un signal acoustique,
le moyen d'émission (146) est un transmetteur de signal acoustique,
le transmetteur de signal acoustique est un disque piézoélectrique.
